# EUROPEAN PATENT APPLICATION

(11) **EP 4 712 621 A1**
(43) Date of publication of application: **18.03.2026**
(21) Application number: 23936037.3
(22) Date of filing: 09.05.2023
(51) Int. Cl.: H04W 72/0446

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/093084
(87) International publication number: WO 2024/229710

(57) **Abstract**

The present application relates to a communication method and apparatus, and a device and a storage medium. The method comprises: determining first information, wherein the first information is used for indicating that an uplink (UL) signal is sent on at least one of a sub-band full duplex (SBFD) symbol and a non-SBFD symbol; and on the basis of the first information, determining an invalid symbol in a symbol where the UL signal is located, wherein the invalid symbol represents a symbol that does not allow the sending of the UL signal. A possible invalid symbol is determined by indicating whether data is allowed to be sent on at least one of an SBFD symbol and a non-SBFD symbol.

## Description

### TECHNICAL FIELD

This disclosure relates to the field of communication technology, and in particular to communication methods, related apparatuses, related devices, and a related storage medium.

### BACKGROUND

In order to improve uplink coverage and throughput, some solutions propose to study subband full duplex (SBFD). For example, one carrier component (CC) in a downlink (DL) symbol or in a flexible (F) symbol may be divided into subbands (SB) in the frequency domain. The SBs may include one uplink (UL) subband and at least one DL subband. For example, the SBs include 1 or 2 DL subbands. In a case where a symbol includes both a DL subband and a UL subband in the frequency domain, the symbol may be called "SBFD symbol".

### SUMMARY

In order to improve uplink coverage and throughput, the disclosure provides communication methods, related apparatuses, related devices and related storage media.

According to a first aspect of an embodiment of the disclosure, a communication method is provided. The method is performed by a terminal and includes: determining first information, in which the first information indicates that an uplink (UL) signal is sent in at least one of a subband full-duplex (SBFD) symbol or a non-SBFD symbol; and determining an invalid symbol in symbols where the UL signal is located, based on the first information, in which the invalid symbol represents a symbol in which sending the UL signal is not allowed.

According to a second aspect of an embodiment of the disclosure, a communication method is provided. The method is performed by a network device and includes: sending first information, in which the first information indicates that a terminal sends an uplink (UL) signal in at least one of a subband full-duplex (SBFD) symbol or a non-SBFD symbol, a symbol where the UL signal is located includes an invalid symbol, and the invalid symbol represents a symbol in which the terminal is not allowed to send the UL signal.

According to a third aspect of an embodiment of the disclosure, a communication apparatus is provided. The communication apparatus includes a processing module configured to determine first information, in which the first information indicates that an uplink (UL) signal is sent in at least one of a subband full-duplex (SBFD) symbol or a non-SBFD symbol. The processing module is further configured to determine an invalid symbol in symbols where the UL signal is located, based on the first information, and the invalid symbol represents a symbol in which sending the UL signal is not allowed.

According to a fourth aspect of an embodiment of the disclosure, a communication apparatus is provided. The communication apparatus includes a sending module configured to send first information, in which the first information indicates that a terminal sends an uplink (UL) signal in at least one of a subband full-duplex (SBFD) symbol or a non-SBFD symbol, symbols where the UL signal is located includes an invalid symbol, and the invalid symbol represents a symbol in which the terminal is not allowed to send the UL signal.

According to a fifth aspect of an embodiment of the disclosure, a communication system is provided. The system includes: sending by a network device first information to a terminal, in which the first information indicates that the terminal sends an uplink (UL) signal in at least one of a subband full-duplex SBFD (symbol) or a non-SBFD symbol; determining by the terminal the first information; determining by the terminal an invalid symbol in symbols where the UL signal is located based on the first information, in which the invalid symbol represents a symbol in which sending the UL signal is not allowed; determining by the terminal valid symbol(s) in the symbols where the UL signal is located based on the invalid symbol; and sending by the terminal the UL signal to the network device based on the valid symbol(s).

According to a sixth aspect of an embodiment of the disclosure, a communication system is provided. The system includes: sending by a network device first information to a terminal, in which the first information indicates that the terminal sends an uplink (UL) signal in at least one of a sub-band full-duplex SBFD symbol or a non-SBFD symbol; determining by the terminal the first information; determining by the terminal an invalid symbol in symbols where the UL signal is located based on the first information, in which the invalid symbol represents a symbol in which sending the UL signal is not allowed; determining by the terminal valid symbol(s) in the symbol where the UL signal is located based on the invalid symbol; sending by the terminal the UL signal to a second network device based on the valid symbol(s), in which the network device includes a first network device and a second network device, the first network device is a network device corresponding to a first cell, the second network device is a network device corresponding to a second cell, the first cell is a cell with a smallest cell index in a first cell group, any one cell in the first cell group is an activated serving cell, the second cell is a cell in the serving cells other than the first cell, and the second cell satisfies at least one of following conditions: the second cell being an activated serving cell; the second cell being configured to perform conflict processing on a conflict generated between the second cell and the first cell.

According to a seventh aspect of an embodiment of the disclosure, a communication device is provided. The communication device includes a processor and a memory for storing instructions executable by the processor. The processor is configured to perform the methods of the first aspect and any one of the methods in the first aspect.

According to an eighth aspect of an embodiment of the disclosure, a communication device is provided. The communication device includes a processor and a memory for storing instructions executable by the processor. The processor is configured to perform the methods of the second aspect and any one of the methods in the second aspect.

According to the ninth aspect of the embodiment of the disclosure, a non-transitory computer-readable storage medium is provided. When instructions in the storage medium are executed by a processor of a terminal, the terminal is configured to perform the methods of the first aspect and any one of the methods in the first aspect.

According to the tenth aspect of the embodiment of the disclosure, a non-transitory computer-readable storage medium is provided. When instructions in the storage medium are executed by a processor of a terminal, the terminal is configured to perform the methods of the second aspect and any one of the methods in the second aspect.

The technical solution according to the embodiments of the disclosure may have the following beneficial effects. By indicating whether data is allowed to be sent in at least one of the SBFD symbol or the non-SBFD symbol, possible invalid symbols are determined, thereby ensuring that in transmitting an uplink signal, the uplink signal may be sent in allowed symbols, such that uplink communication efficiency may be improved.

It is to be understood that the foregoing general description and the following detailed description are illustrative and explanatory only and are not restrictive of the disclosure.

### BRIEF DESCRIPTION OF THE DRAWINGS

The accompanying drawings herein are incorporated in and constitute a part of the specification, illustrate embodiments consistent with the disclosure, and together with the description, serve to explain the principles of the disclosure.
FIG. 1 is a schematic diagram illustrating a wireless communication system according to an example embodiment.
FIG. 2 is a schematic diagram illustrating a subband full-duplex (SBFD) according to an example embodiment.
FIG. 3 is a schematic diagram illustrating an SBFD in a carrier aggregation (CA) scenario according to an example embodiment.
FIG. 4 is a schematic diagram illustrating an SBFD in another CA scenario according to an example embodiment.
FIG. 5 is a schematic diagram illustrating PUSCH transmission according to an example embodiment.
FIG. 6 is a flowchart illustrating a communication method according to an example embodiment.
FIG. 7 is a flowchart illustrating another communication method according to an example embodiment.
FIG. 8 is a flowchart illustrating yet another communication method according to an example embodiment.
FIG. 9 is a flowchart illustrating yet another communication method according to an example embodiment.
FIG. 10 is a schematic diagram illustrating a communication apparatus according to an example embodiment.
FIG. 11 is a schematic diagram illustrating another communication apparatus according to an example embodiment.
FIG. 12 is a schematic diagram illustrating a communication device according to an example embodiment.
FIG. 13 is a schematic diagram illustrating another communication device according to an example embodiment.

### DETAILED DESCRIPTION

Here, example embodiments will be described in detail, examples of which are shown in the accompanying drawings. When the following description refers to the drawings, unless otherwise indicated, the same numbers in different drawings represent the same or similar elements. The implementations described in the following example embodiments do not represent all implementations consistent with the disclosure.

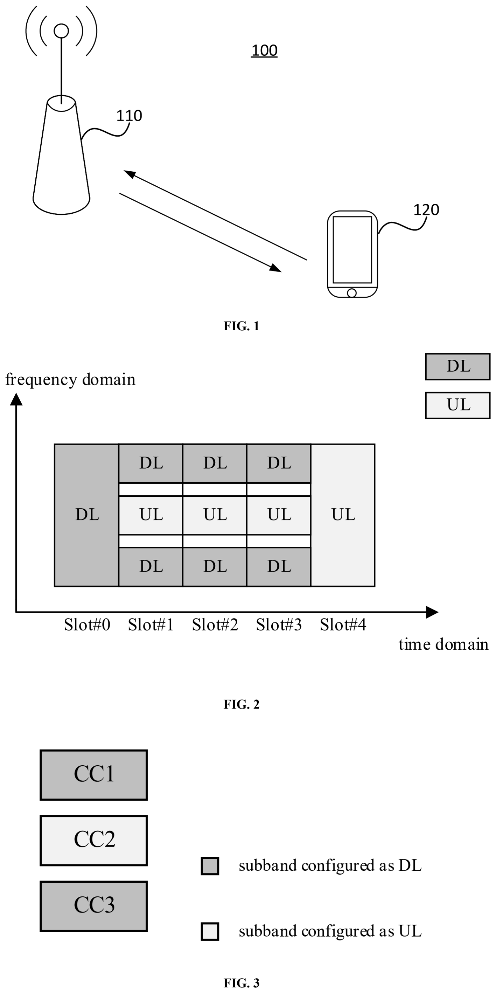

The communication method according to the disclosure may be applied to a wireless communication system 100 illustrated in FIG. 1. The network system may include a network device 110 and a terminal 120. It may be understood that the wireless communication system illustrated in FIG. 1 is only for schematic illustration, and the wireless communication system may also include other network devices, for example, core network devices, wireless relay devices, and wireless backhaul devices, which are illustrated in FIG. 1. Embodiments of the disclosure do not limit the number of network devices and the number of terminals included in the wireless communication system.

It may be further understood that the wireless communication system of the embodiments of the disclosure is a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), carrier sense multiple access with collision avoidance. Based on the capacity, rate, delay and other factors of different networks, the networks may be divided into second generation (2G) network, third generation (3G) network, fourth generation (4G) network or future evolution network, such as the fifth generation wireless communication system (5G) network. The 5G network may also be called a new radio (NR). For the convenience of description, the disclosure sometimes refers to the wireless communication network as a network.

Furthermore, the network device 110 involved in the disclosure may also be referred to as a wireless access network device. The wireless access network device may be a base station, an evolved node B (eNB), a home base station, an access point (AP) in a wireless fidelity (WIFI) system, a wireless relay node, a wireless backhaul node, a transmission point (TP), or a transmission reception point (TRP), etc. It may also be a gNB in an NR system, or it may also be a component or a part of a device constituting a base station. When it is a vehicle-to-everything (V2X) communication system, the network device may also be a vehicle-mounted device. It should be understood that in the embodiments of the disclosure, the specific technology and specific device form adopted by the network device are not limited.

Moreover, the terminal 120 involved in the disclosure may also be referred to as a terminal device, user equipment (UE), mobile station (MS), mobile terminal (MT), etc., which is a device that provides voice and/or data connectivity to users. For example, the terminal may be a handheld device with wireless connection function, a vehicle-mounted device, etc. At present, some examples of the terminal are mobile phone, pocket personal computer (PPC), handheld computer, personal digital assistant (PDA), laptop, tablet computer, wearable device, or vehicle-mounted device, etc. In addition, when it is a vehicle-to-everything (V2X) communication system, the terminal may also be a vehicle-mounted device. It should be understood that the embodiments of the disclosure do not limit the specific technology and specific device form adopted by the terminal.

In the embodiments of the disclosure, the network device 110 and the terminal 120 may adopt any feasible wireless communication technology to achieve mutual data transmission. The transmission channel corresponding to the data sent by the network device 110 to the terminal 120 is called downlink (DL), and the transmission channel corresponding to the data sent by the terminal 120 to the network device 110 is called uplink (UL). It may be understood that the network device involved in the embodiments of the disclosure may be a base station. Certainly, the network device may also be any other possible network device, and the terminal may be any possible terminal, which is not limited in the disclosure.

In order to improve UL coverage and throughput, subband full-duplex (SBFD) will be studied in the duplex enhancement project of release (Rel) 18. For example, a carrier component (CC) in a DL symbol or in a flexible (F) symbol may be divided into subbands in the frequency domain. The subbands may include a UL subband and at least one DL subband. For example, 1 or 2 DL subbands are included. The network device may send a DL signal in the DL subband and receive a UL signal in the UL subband. The DL symbol or the F symbol may be configured by time division duplexing (TDD)-UL-DL-common configuration (configcommon) or TDD-UL-DL-dedicated configuration (configdedicated), or may be indicated as a DL symbol or an F symbol via downlink control information (DCI). The DCI may adopt DCI format 2-0, for example.

In a case where a symbol includes both the DL subband and the UL subband in the frequency domain, the symbol may be called "SBFD symbol". Similarly, in a case where symbols in a slot include at least one SBFD symbol, this kind of slot may be called "SBFD slot". It may be understood that in a case where all symbols contained in a slot are SBFD symbols, this type of slot may be called "SBFD slot". For example, as illustrated in FIG. 2, within the frequency domain range corresponding to the slot#0, the frequency domain resources are all DL. Therefore, the slot#0 may be considered as a DL slot. Similarly, the slot 4#is a UL slot. For each of the slot#1, slot#2 and slot#3, both the UL subband and the DL subband are included, and thus they may be considered as SBFD slots. Certainly, each symbol in the SBFD slot may be considered as an SBFD symbol. Certainly, for each of slot#1 to slot#3, it may be seen that there is a certain gap between the UL subband and the DL subband, which may be called "guard band (GB)". Frequency domain isolation is used for reducing the interference between the UL signal in the UL subband and the DL signal in the DL subband. The SBFD scenario illustrated in FIG. 1 may be considered as implementing SBFD on one CC. Certainly, in some cases, the SBFD may also be enabled based on carrier aggregation (CA).

In some embodiments, the SBFD may be enabled by using different TDD configurations for different CCs. For example, as illustrate in FIG. 3, some of the different CCs are used for DL and some of the different CCs are used for UL to enable the SBFD. From a CA perspective, it may be considered that corresponding symbols in a CA scenario are SBFD symbols, and/or corresponding slots are SBFD slots.

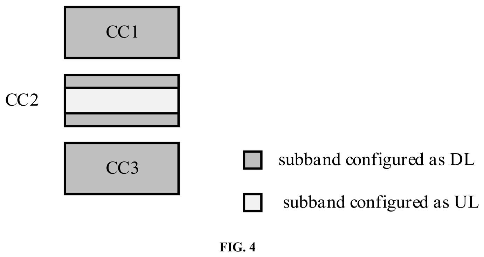

In other embodiments, in the CA scenario, it is possible that one CC adopts the SBFD configuration to enable the SBFD. For example, as illustrated in FIG. 4, for any CC in the CA scenario, such as CC2 in FIG. 4, both the UL subband and the DL subband are included in the CC, and thus it is considered that CC2 adopts the SBFD configuration. Therefore, from the CA perspective, it may be considered that the corresponding symbols in the CA scenario may be SBFD symbols, and/or the corresponding slots are SBFD slots.

It may be understood that for a symbol to be called "SBFD symbol", it may be considered that in the scenario where the SBFD is implemented on one CC, both the UL subband and the DL subband are included in the frequency domain for one symbol. For a symbol to be called "SBFD symbol", it may also be considered that in the scenario where the SBFD is implemented based on CA, the SBFD is implemented on one CC for one symbol, for example both the UL subband and the DL subband are included in the frequency domain in one symbol, or opposite directions are configured on different CCs for one symbol, such as one CC is configured as DL and the other CC is configured as UL.

In some embodiments, the PUSCH coverage performance may be enhanced by the physical uplink shared channel (PUSCH) repetition type B to reduce the latency. For example, the symbol position where the terminal actually sends the PUSCH may be determined by being indicated through a DCI and/or being configured through a radio resource control (RRC) and by determining the invalid symbol(s). The PUSCH transmission indicated by the DCI may be cross-slot transmission, that is, the PUSCH is sent over multiple slots.

In some embodiments, PUSCH repetition type B may include a nominal repetition and an actual repetition. The symbols where the nominal repetition is in are determined via the network device by being indicated through a DCI and/or being configured through an RRC, used for sending the PUSCH. The symbols where the actual repetition is in are actually determined by the terminal based on information, such as a slot boundary and positions of invalid symbols, used for actually sending the PUSCH.

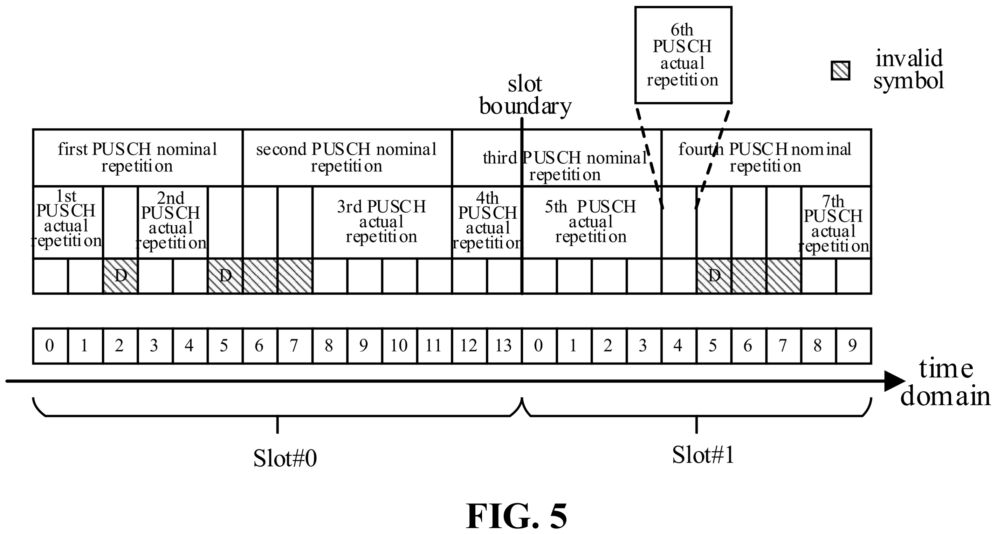

For example, the terminal may determine a starting slot, a starting symbol S and a continuous symbol duration L of the first nominal repetition based on the DCI indication. For example, the terminal first determines the starting slot based on DCI, determines the starting symbol S in the starting slot, and determines the first nominal repetition based on the continuous symbol duration L. For example, the first PUSCH nominal repetition is illustrated in FIG. 5. The terminal may also determine the number of nominal repetitions based on a repetition number parameter configured through the RRC. The repetition number parameter may be numberOfRepetitions-r16. The terminal determines the symbols corresponding to each nominal repetition via the DCI in combination with the RRC. As illustrated in FIG. 5, assuming that numberOfRepetitions-r16 is 4, the starting symbol S is 0, and the continuous symbol duration L is 6, the symbols corresponding to the first PUSCH nominal repetition, the second PUSCH nominal repetition, the third PUSCH nominal repetition and the fourth PUSCH nominal repetition are determined. For example, a slot usually includes 14 symbols.

The terminal may determine which symbol or symbols corresponding to each nominal repetition is/are invalid symbol(s) based on an invalid symbol determination criteria. Then, symbols other than the invalid symbol(s) may be determined as potential valid symbols. For example, in a case where there are consecutive valid symbols in the symbols corresponding to a nominal repetition, the consecutive valid symbols may be mapped to an actual repetition. Normally, one nominal repetition may correspond to one or more actual repetitions. Certainly, assuming that the duration of the nominal repetition is 1 symbol, or the number of symbols of an actual repetition is 1, it may choose not to send any UL signal, such as the sixth PUSCH actual repetition illustrated in FIG. 5. The terminal will not send the PUSCH in symbol#4 in the corresponding slot#1.

It may be understood that blocks with the diagonal lines in the third row in FIG. 5 represent invalid symbols. Some invalid symbols may be DL symbols. In other words, the invalid symbols may include DL symbols or other possible symbols.

Therefore, in some embodiments, the invalid symbol(s) may be determined in any one or more of the following ways.

As an example, in the tdd-UL-DL-ConfigurationCommon and/or tdd-UL-DL-ConfigurationDedicated configured by the RRC, a symbol configured as a DL symbol is determined as an invalid symbol. It may be understood that in some cases, it is possible that tdd-UL-DL-ConfigurationDedicated is not configured, or tdd-UL-DL-ConfigurationDedicated is only configured in some specific cases. Certainly, the disclosure does not limit the specific scenarios of configuring or not configuring tdd-UL-DL-ConfigurationDedicated.

As another example, the invalid symbol(s) is/are determined based on the synchronization signal/physical broadcast channel block (SSB) burst position (PositionsInBurst) configured by the RRC. That is, the symbol(s) in which the SSB is located in the ssb-PositionsInBurst is/are determined as the invalid symbol(s).

As another example, a symbol is determined to be an invalid symbol based on an invalid symbol pattern (InvalidSymbolPattern) configured by the RRC and based on a DCI indication.

As another example, the invalid symbol(s) is/are determined based on a physical downlink control channel (PDCCH) configuration (config) system information block (SIB) 1 (PDCCH-ConfigSIB1) configured by the RRC. That is, the symbol(s) in which the type0-PDCCH configured in the PDCCH-ConfigSIB1 is location is/are determined as the invalid symbol(s).

As another example, one or more symbols after the DL symbol in the tdd-UL-DL-ConfigurationCommon and/or tdd-UL-DL-ConfigurationDedicated configured through the RRC are determined as the invalid symbol(s). The one or more symbols may be determined by the number of invalid symbols for DL-UL switching (numberOfInvalidSymbolsForDL-UL-Switching). The subcarrier spacing (SCS) corresponding to the symbol length may be determined by the reference subcarrier spacing (referenceSubcarrierSpacing) configured in the tdd-UL-DL-ConfigurationCommon.

As another example, in a CA scenario, in a case where simultaneous signal transmission and reception is not supported by different cells including a first cell and a second cell, for a symbol used for receiving the SSB in the first cell, the symbol is considered as an invalid symbol in the second cell.

As another example, in a CA scenario, in a case where a symbol satisfies any one or more of the following conditions in the first cell, the symbol is an invalid symbol in the second cell. Any cell in a first cell group is an activated serving cell.

The above-mentioned conditions may include the following.
1. The symbol is a PUSCH repetition type B with Type 1 configured Grant (CG) or an activated PUSCH repetition type B with Type 2 CG. For PUSCH repetition type B with Type 2 CG, the PUSCH sent in the first repetition is not included.
2. The symbol is configured as a DL symbol in the first cell, or one or more of a PDCCH, a physical downlink shared channel (PDSCH) or a channel state information-reference signal (CSI-RS) is received in the first cell in the symbol.

For example, the symbol is configured as a DL symbol in the first cell through tdd-UL-DL-ConfigurationCommon and/or tdd-UL-DL-ConfigurationDedicated. Or the symbol is for example configured in the first cell through the RRC to receive one or more of PDCCH, PDSCH or CSI-RS.

It may be understood that the first cell may be a reference cell, the second cell may be a cell other than the first cell in the serving cells, and the second cell satisfies at least one of the following conditions: the second cell being an activated serving cell, or the second cell being configured to perform conflict handling on the conflict generated between the second cell and the first cell.

For example, the second cell may configure directionalCollisionHandling-r16 to be enabled, that is, directionalCollisionHandling-r16=enabled.

Certainly, the reference cell is the activated serving cell.

For the PUSCH repetition type B with Type 1 CG, it means that after the terminal is configured by the RRC, the terminal waits for a certain activation time, and the terminal may use the configured transmission parameters to periodically send the PUSCH repetition type B through the configured time and frequency resources.

For the PUSCH repetition type B with Type 2 CG, it means that some parameters of UE are configured by the RRC, such as period, open-loop power control, waveform, redundancy version, number of repetitions, frequency hopping, number of hybrid automatic repeat-request (HARQ) processes, etc. The DCI activates and configures parameters, such as time domain resources, frequency domain resources, demodulation reference signal (DMRS), modulation and coding scheme (MCS), etc., so that the activation time may be determined. The PUSCH repetition type B may be periodically sent through the RRC configuration in combination with the time and frequency resources activated and configured by the DCI. The terminal may send signaling in the medium-access-control control element (MAC CE) to confirm the activation or deactivation of the PUSCH repetition type B with Type 2 CG, thereby avoiding confusion between the situation in which the terminal is configured not to send any PUSCH in PUSCH repetition type B with Type 2 CG and the situation in which the terminal does not send PUSCH when there is no UL signal.

However, the DL subband in the SBFD symbol cannot be used to send UL signals and/or channels. Therefore, the frequency domain ranges that may be used for UL transmission are different for the SBFD slot and UL slot or for the SBFD symbol and UL symbol. When the terminal is indicated by the DCI or configured by the RRC to send the PUSCH repetition type B, how to determine the invalid symbol(s) when introducing SBFD is still undecided.

Therefore, the disclosure provides communication methods, related apparatuses, related devices, and related storage media, which determine possible invalid symbols by indicating whether data is allowed to be sent in at least one of an SBFD symbol or a non-SBFD symbol, thereby ensuring that in transmitting an uplink signal, the uplink signal may be sent in allowed symbols, such that the uplink communication efficiency may be improved.

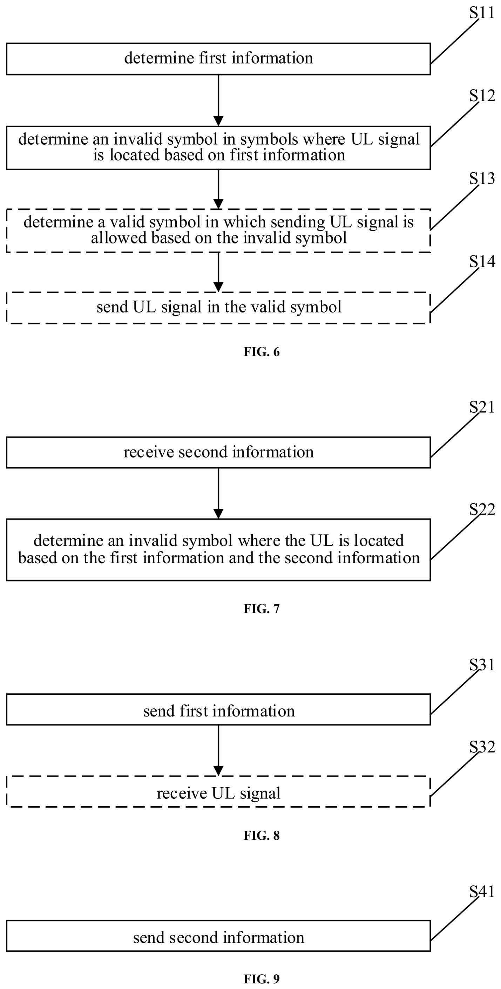

FIG. 6 is a flowchart illustrating a communication method according to an example embodiment. As illustrated in FIG. 6, the method is performed by a terminal and may include the following.

In step S11, first information is determined.

In some embodiments, the terminal may determine the first information. The first information may indicate that the UL signal is sent in at least one of SBFD symbol(s) or non-SBFD symbol(s).

It may be understood that the signal in the various embodiments of the disclosure may be considered to include a reference signal and/or a channel. For example, the UL signal may include PUSCH, sounding reference signal (SRS), or others, which are not limited in the disclosure.

As an example, the first information may be sent by the network device. That is, the terminal receives the first information sent by the network device to determine whether the UL signal is allowed to be sent in the SBFD symbol(s) and/or in the non-SBFD symbol(s).

As another example, a predefined rule for determining the first information may be defined in advance, and the terminal may determine the first information based on the predefined rule to determine whether the UL signal is allowed to be sent in the SBFD symbol(s) and/or in the non-SBFD symbol(s).

In step S12, invalid symbol(s) is/are determined in symbols where the UL signal is located, based on the first information.

In some embodiments, the terminal may determine the invalid symbol(s) in the symbols where the UL signal is located based on the first information determined in S11. The invalid symbol may be understood as a symbol in which sending the UL signal is not allowed.

As an example, in a case where the first information indicates that the UL signal is allowed to be sent in the SBFD symbol(s), the terminal may determine the invalid symbol(s) in the symbols where the UL signal is located. It may be understood that in this case, the symbols where the UL signal is located may include the SBFD symbol(s).

As another example, in a case where the first information indicates that the UL signal is allowed to be sent in the non-SBFD symbol(s), the terminal may determine the invalid symbol(s) in the symbols where the UL signal is located. It may be understood that in this case, the symbols where the UL signal is located may include the non-SBFD symbol(s).

As another example, in a case where the first information indicates that the UL signal is allowed to be sent in the SBFD symbol(s) and in the non-SBFD symbol(s), the terminal may determine the invalid symbol(s) in the symbols where the UL signal is located. It may be understood that in this case, the symbols where the UL signal is located may include the SBFD symbol(s) and/or the non-SBFD symbol(s).

Certainly, in some embodiments, the method may further include the following.

In step S13, valid symbol(s) in which sending the UL signal is allowed is/are determined based on the invalid symbol(s).

In some embodiments, the terminal may determine the valid symbol(s) in the symbols where the UL signal is located based on the invalid symbol(s) determined in S12. It may be understood that the valid symbol may be understood as a symbol in which sending the UL signal is allowed.

For example, the terminal determines each symbol corresponding to the UL signal and determines the invalid symbol(s). The terminal determines symbol(s) other than the invalid symbol(s) among the symbols corresponding to the UL signal as the valid symbol(s).

For example, reference may be made to the third row illustrated in FIG. 5, taking the first PUSCH nominal repetition as an example, it may be seen that symbol#2 and symbol#5 are determined as invalid symbols. The PUSCH nominal repetition corresponds to 6 symbols. It may be understood that the PUSCH nominal repetition may be considered as the UL signal that the terminal wants to send. Based on the 6 symbols and the determined 2 invalid symbols, the terminal determines that the remaining 4 symbols are valid symbols, namely symbol#0, symbol#1, symbol#3, and symbol#4.

In step S14, the UL signal is sent in the valid symbol(s).

In some embodiments, the terminal may send the UL signal in the valid symbol(s).

For example, still taking the first PUSCH nominal repetition in FIG. 5 as an example, the terminal determines to send the UL signal in symbol#0, symbol#1, symbol#3, and symbol#4. For example, the first PUSCH actual repetition is sent in symbol#0 and in symbol#1, and the second PUSCH actual repetition is sent in symbol#3 and in symbol#4.

The disclosure determines possible invalid symbols by indicating whether data is allowed to be sent in at least one of the SBFD symbol(s) or the non-SBFD symbol(s), thereby ensuring that the uplink signal may be sent in allowed symbols in transmitting the uplink signal, such that the uplink communication efficiency may be improved.

In the communication method according to the embodiment of the disclosure, determining the invalid symbol(s) in the symbols where the UL signal is located based on the first information in S12 may include: determining the invalid symbol(s) based on a preset condition. The preset condition corresponds to the first information.

In some embodiments, the terminal may determine the invalid symbol(s) based on the preset condition corresponding to the first information. The preset condition may include one or more of a first preset condition, a second preset condition or a third preset condition.

As an example, in a case where the first information indicates that the UL signal is allowed to be sent in the SBFD symbol(s) and where the first information also indicates that the UL signal is allowed to be sent in the non-SBFD symbol(s), the terminal may determine the invalid symbol(s) based on the first preset condition. It may be understood that the first preset condition corresponds to the first information indicating that the UL signal is allowed to be sent in the SBFD symbol(s) and in the non-SBFD symbol(s).

As another example, in a case where the first information indicates that the UL signal is allowed to be sent in the SBFD symbol(s), the terminal may determine the invalid symbol(s) based on the second preset condition. It may be understood that the second preset condition corresponds to the first information indicating that the UL signal is allowed to be sent in the SBFD symbol(s).

As another example, in a case where the first information indicates that the UL signal is allowed to be sent in the non-SBFD symbol(s), the terminal may determine the invalid symbol(s) based on the third preset condition. It may be understood that the third preset condition corresponds to the first information indicating that the UL signal is allowed to be sent in the non-SBFD symbol(s).

The disclosure may adopt appropriate preset conditions to determine the invalid symbol(s) depending on different situations indicated by the first information, thereby ensuring that in transmitting the uplink signal, the uplink signal may be sent in allowed symbols, such that the uplink communication efficiency may be improved.

In the communication method according to the embodiment of the disclosure, the first information indicates that the UL signal is sent in the SBFD symbol(s) and indicates that the UL signal is sent in the non-SBFD symbol(s), the preset condition includes at least one of: the symbol(s) where the SSB is located being DL symbol(s) or flexible (F) symbol(s), and the symbol(s) where the SSB is located being the invalid symbol(s); the symbol(s) where the SSB is located being DL symbol(s), F symbol(s) or SBFD symbol(s), and the symbol(s) where the SSB is located being the invalid symbol(s); the symbol(s) where the SSB is located being SBFD symbol(s), the terminal being configured to perform measurement on the SSB, and the symbol(s) where the SSB is located being the invalid symbol(s); the symbol(s) where the Type0-PDCCH is located being DL symbol(s) or F symbol(s), and the symbol(s) where the Type0-PDCCH is located being the invalid symbol(s); the symbol(s) where the Type0-PDCCH is located being DL symbol(s), F symbol(s) or SBFD symbol(s), and the symbol(s) where the Type0-PDCCH is located being the invalid symbol(s); the symbol(s) where the Type0-PDCCH is located being SBFD symbol(s), the terminal being configured to receive DCI on Type0-PDCCH, and the symbol(s) where the Type0-PDCCH being the invalid symbol(s); N symbols after a DL symbol or an SBFD symbol being invalid symbols, where N is an integer greater than or equal to 0; a target symbol being configured as a DL symbol in a first cell, the target symbol being a non-SBFD symbol in the CA scenario, and the target symbol being an invalid symbol in the second cell, where the serving cells includes the first cell and the second cell, and the second cell is a serving cell in the serving cells that is different from the first cell; a target symbol being configured as any one of a DL symbol, a UL symbol or an F symbol in a first cell, the target symbol being configured as a UL symbol or an F symbol in the second cell, and the target symbol being a valid symbol in the second cell.

In some embodiments, in a case where the first information indicates that the UL signal is sent in the SBFD symbol(s) and indicates that the UL signal is sent in the non-SBFD symbol(s), the terminal may determine the invalid symbol(s) based on any one or more of the following preset conditions. In a case where the first information indicates that the UL signal is sent in the SBFD symbol(s) and indicates that the UL signal is sent in the non-SBFD symbol(s), the preset condition may be referred to as the first preset condition.

As an example, the terminal receives the first information. The first information indicates that the UL signal is sent in the SBFD symbol(s) and indicates that the UL signal is sent in the non-SBFD symbol(s). The terminal may further determine the invalid symbol(s) based on any one or more of the following first preset conditions.

As another example, the terminal determines first information for indicating that the UL signal is sent in the SBFD symbol(s) and indicating that the UL signal is sent in the non-SBFD symbol(s), based on a predefined rule. The terminal may further determine the invalid symbol(s) based on any one or more of the following first preset conditions.

In some embodiments, the first preset condition may include that the symbol(s) where the SSB is located is/are DL symbol(s) or F symbol(s), and the symbol(s) where the SSB is located is/are the invalid symbol(s). The non-SBFD symbol may include any one or more of a UL symbol, a DL symbol, or an F symbol.

In some embodiments, in a case where the terminal determines that the first information indicates that the UL signal is sent in the SBFD symbol(s) and indicates that the UL signal is sent in the non-SBFD symbol(s), the terminal determines that the symbol(s) where the SSB is located is/are DL symbol(s) or F symbol(s), then the symbol(s) where the SSB is located is/are invalid symbol(s).

In some embodiments, the terminal may configure the symbol(s) where the SSB is located as DL symbol(s) or F symbol(s) through a first parameter. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the DL symbol(s) or the F symbol(s) through the first parameter, then the symbol(s) where the SSB is located is/are the invalid symbol(s).

In some embodiments, the first parameter may be ssb-PositionsInBurst. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the DL symbol(s) or the F symbol(s) through the ssb-PositionsInBurst, then the symbol(s) where the SSB is located is/are the invalid symbol(s).

In some embodiments, the first preset condition may include that the symbol(s) where the SSB is located is/are DL symbol(s), F symbol(s), or SBFD symbol(s), then the symbol(s) where the SSB is located is/are the invalid symbol(s).

In some embodiments, in a case where the terminal determines that the first information indicates that the UL signal is sent in the SBFD symbol(s) and indicates that the UL signal is sent in the non-SBFD symbol(s), the terminal determines that the symbol(s) where the SSB is located is/are DL symbol(s), F symbol(s) or SBFD symbol(s), then the symbol(s) where the SSB is located is/are the invalid symbol(s).

In some embodiments, the terminal may configure the symbol(s) where the SSB is located as DL symbol(s), F symbol(s), or SBFD symbol(s) through the first parameter. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the DL symbol(s), the F symbol(s), or the SBFD symbol(s) through the first parameter, then the symbol(s) where the SSB is located is/are the invalid symbol(s).

In some embodiments, the first parameter may be ssb-PositionsInBurst. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the DL symbol(s), the F symbol(s) or the SBFD symbol(s) through the ssb-PositionsInBurst, then the symbol(s) where the SSB is located is/are the invalid symbol(s).

In some embodiments, the first preset condition may include that the symbol(s) where the SSB is located is/are SBFD symbol(s), the terminal is configured to perform measurement on the SSB, and the symbol(s) where the SSB is located is/are the invalid symbol(s).

In some embodiments, in a case where the terminal determines that the first information indicates that the UL signal is sent in the SBFD symbol(s) and indicates that the UL signal is sent in the non-SBFD symbol(s), the terminal determines that the symbol(s) where the SSB is located is/are the SBFD symbol(s) and the terminal is configured to perform the measurement on the SSB, then the symbol(s) where the SSB is located is/are the invalid symbol(s).

In some embodiments, the terminal may configure the symbol(s) where the SSB is located as SBFD symbol(s) through the first parameter. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the SBFD symbol(s) through the first parameter, and it is determined that the terminal is configured to perform measurement on the SSB, then the symbol(s) where the SSB is located is/are the invalid symbol(s).

In some embodiments, the first parameter may be ssb-PositionsInBurst. That is, in a case where the terminal determines that the first information indicates that the UL signal is sent in the SBFD symbol(s) and indicates that the UL signal is sent in the non-SBFD symbol(s), the symbol(s) where the SSB is located is/are configured as the SBFD symbol(s) through the ssb-PositionsInBurst and it is determined that the terminal is configured to perform the measurement on the SSB, then the symbol(s) where the SSB is located is/are the invalid symbol(s).

In some embodiments, the first preset condition may include that the symbol(s) where the Type0-PDCCH is located is/are DL symbol(s) or F symbol(s), then the symbol(s) where the Type0-PDCCH is located is/are the invalid symbol(s).

In some embodiments, in a case where the terminal determines that the first information indicates that the UL signal is sent in the SBFD symbol(s) and indicates that the UL signal is sent in the non-SBFD symbol(s), the symbol(s) where the Type0-PDCCH is located is/are the DL symbol(s) or the F symbol(s), then the symbol(s) where the Type0-PDCCH is located is/are the invalid symbol(s).

In some embodiments, the terminal may configure the symbol(s) where the Type0-PDCCH is located as DL symbol(s) or F symbol(s) through a second parameter. That is, in a case where the terminal determines that the first information indicates that the UL signal is sent in the SBFD symbol(s) and indicates that the UL signal is sent in the non-SBFD symbol(s), the symbol(s) where the Type0-PDCCH is located is/are configured as the DL symbol(s) or the F symbol(s) through the second parameter, then the symbol(s) where the Type0-PDCCH is located is/are the invalid symbol(s).

In some embodiments, the second parameter may be PDCCH-ConfigSIB1. That is, in a case where the terminal determines that the first information indicates that the UL signal is sent in the SBFD symbol(s) and indicates that the UL signal is sent in the non-SBFD symbol(s), the symbol(s) where the Type0-PDCCH is located is/are configured as the DL symbol(s) or F symbol(s) through the PDCCH-ConfigSIB 1, then the symbol(s) where the Type0-PDCCH is located is/are the invalid symbol(s).

In some embodiments, the first preset condition may include that the symbol(s) where the Type0-PDCCH is located is/are DL symbol(s), F symbol(s) or SBFD symbol(s), then the symbol(s) where the Type0-PDCCH is located is/are the invalid symbol(s).

In some embodiments, in a case where the terminal determines that the first information indicates that the UL signal is sent in the SBFD symbol(s) and indicates that the UL signal is sent in the non-SBFD symbol(s), it is determined that the symbol(s) where the Type0-PDCCH is located is/are DL symbol(s), F symbol(s) or SBFD symbol(s), then the symbol(s) where the Type0-PDCCH is located is/are the invalid symbol(s).

In some embodiments, the terminal may configure the symbol(s) where the Type0-PDCCH is located as the DL symbol(s), the F symbol(s) or the SBFD symbol(s) through a second parameter. That is, in the case where the terminal determines that the first information indicates that the UL signal is sent in the SBFD symbol(s) and indicates that the UL signal is sent in the non-SBFD symbol(s), the symbol(s) where the Type0-PDCCH is located is/are configured as the DL symbol(s), the F symbol(s) or the SBFD symbol(s) through the second parameter, then the symbol(s) where the Type0-PDCCH is located is/are the invalid symbol(s).

In some embodiments, the second parameter may be PDCCH-ConfigSIB1. That is, in the case where the terminal determines that the first information indicates that the UL signal is sent in the SBFD symbol(s) and indicates that the UL signal is sent in the non-SBFD symbol(s), the symbol(s) where the Type0-PDCCH is located is/are configured as the DL symbol(s), the F symbol(s) or the SBFD symbol(s) through the PDCCH-ConfigSIB 1, then the symbol(s) where the Type0-PDCCH is located is/are the invalid symbol(s).

In some embodiments, the first preset condition may include that the symbol(s) where the Type0-PDCCH is located is/are SBFD symbol(s), and the terminal is configured to receive DCI on the Type0-PDCCH, then the symbol(s) where the Type0-PDCCH is located is/are the invalid symbol(s).

In some embodiments, in a case where the terminal determines that the first information indicates that the UL signal is sent in the SBFD symbol(s) and indicates that the UL signal is sent in the non-SBFD symbol(s), it is determined that the symbol(s) where the Type0-PDCCH is located is/are the SBFD symbol(s), and the terminal is configured to receive the DCI on the Type0-PDCCH, then the symbol(s) where the Type0-PDCCH is located is/are the invalid symbol(s).

In some embodiments, the terminal may configure the symbol(s) where Type0-PDCCH is located as the SBFD symbol(s) through the second parameter. That is, in the case where the terminal determines that the first information indicates that the UL signal is sent in the SBFD symbol(s) and indicates that the UL signal is sent in the non-SBFD symbol(s), the symbol(s) where Type0-PDCCH is located is/are configured as the SBFD symbol(s) through the second parameter and it is determined that the terminal is configured to receive the DCI on the Type0-PDCCH, then the symbol(s) where Type0-PDCCH is located is/are the invalid symbol(s).

In some embodiments, the second parameter may be PDCCH-ConfigSIB1. That is, in a case where the terminal determines that the first information indicates that the UL signal is sent in the SBFD symbol(s) and indicates that the UL signal is sent in the non-SBFD symbol(s), the symbol(s) where the Type0-PDCCH is located is/are configured as the SBFD symbol(s) through the PDCCH-ConfigSIB1 and it is determined that the terminal is configured to receive the DCI on the Type0-PDCCH, then the symbol(s) where the Type0-PDCCH is located is/are the invalid symbol(s).

In some embodiments, the first preset condition may include N symbols after a DL symbol or a SBFD symbol are invalid symbols, where N is an integer greater than or equal to 0.

In some embodiments, in the case where the terminal determines that the first information indicates that the UL signal is sent in the SBFD symbol(s) and indicates that the UL signal is sent in the non-SBFD symbol(s), the terminal determines N symbols after the DL symbol or the SBFD symbol, where N is an integer greater than or equal to 0. The terminal determines that the N symbols after the DL symbol or the SBFD symbol are invalid symbols.

In some embodiments, the terminal may configure the N symbols after the DL symbol or the SBFD symbol through a third parameter. That is, in the case where the terminal determines that the first information indicates that the UL signal is sent in the SBFD symbol(s) and indicates that the UL signal is sent in the non-SBFD symbol(s), the terminal configures the N symbols after the DL symbol or the SBFD symbol through the third parameter. The terminal determines that the N symbols after the DL symbol or the SBFD symbol are invalid symbols.

In some embodiments, the third parameter may be tdd-UL-DL-ConfigurationCommon and/or tdd-UL-DL-ConfigurationDedicated. That is, in the case where the terminal determines that the first information indicates that the UL signal is sent in the SBFD symbol(s) and indicates that the UL signal is sent in the non-SBFD symbol(s), the terminal configures the N symbols after the DL symbol or the SBFD symbol through the tdd-UL-DL-ConfigurationCommon and/or the tdd-UL-DL-ConfigurationDedicated. The terminal determines that the N symbols after the DL symbol or the SBFD symbol are invalid symbols.

In some embodiments, the first preset condition may include that a target symbol is configured as a DL symbol in a first cell, and the target symbol is a non-SBFD symbol in a CA scenario, then the target symbol is an invalid symbol in the second cell. Serving cells include the first cell and the second cell, and the second cell is a serving cell that is different from the first cell in the serving cells.

In some embodiments, for the CA scenario, in the case where the terminal determines that the first information indicates that the UL signal is sent in the SBFD symbol(s) and indicates that the UL signal is sent in the non-SBFD symbol(s), it is determined that the target symbol is a DL symbol in the first cell and the target symbol is a non-SBFD symbol in the CA scenario. The terminal may determine that the target symbol is an invalid symbol in a second cell in the serving cells.

It may be understood that the first cell may be a reference cell, and the second cell may be a cell in the serving cells except the reference cell.

It may be understood that reference may be made to FIG. 3, for the CA scenario, the CC may also be called a cell. In the case where different cells do not allow simultaneous transmission and reception, assuming that a DL symbol is configured for the first cell, and the symbol is a non-SBFD symbol, it means that for other cells, the DL symbol is also configured. Since different cells does not allow the simultaneous transmission and reception, the target symbol is considered as an invalid symbol for other cells. That is, for other cells, sending the UL signal is not allowed in the target symbol. Certainly, the other cells here may be understood as the second cell mentioned above.

In some embodiments, the terminal may configure the target symbol as a DL symbol in the first cell through the third parameter. That is, for the CA scenario, in the case where the terminal determines that the first information indicates that the UL signal is sent in the SBFD symbol and indicates that the UL signal is sent in the non-SBFD symbol, the target symbol is configured as the DL symbol in the first cell through the third parameter, and the target symbol is the non-SBFD symbol in the CA scenario. The terminal may determine that the target symbol is the invalid symbol in the second cell in the serving cells.

In some embodiments, the third parameter may be tdd-UL-DL-ConfigurationCommon and/or tdd-UL-DL-ConfigurationDedicated. That is, for the CA scenario, in the case where the terminal determines that the first information indicates that the UL signal is sent in the SBFD symbol(s) and indicates that the UL signal is sent in the non-SBFD symbol(s), the target symbol is configured as the DL symbol in the first cell through the tdd-UL-DL-ConfigurationCommon and/or the tdd-UL-DL-ConfigurationDedicated, and the target symbol is the non-SBFD symbol in the CA scenario. The terminal may determine that the target symbol is the invalid symbol in the second cell of the serving cells.

In some embodiments, the serving cell may be a serving cell configured with directionalCollisionHandling-r16=enabled. Certainly, in the embodiments of the disclosure, the serving cell may be a serving cell configured with directionalCollisionHandling-r16=enabled.

In some embodiments, the first preset condition may include that the target symbol is configured as any one of a DL symbol, a UL symbol, or an F symbol in the first cell, and the target symbol is configured as a UL symbol or an F symbol in the second cell, then the target symbol is a valid symbol in the second cell.

For example, in a CA scenario, in the case where the terminal determines that the first information indicates that the UL signal is sent in the SBFD symbol(s) and that the UL signal is sent in the non-SBFD symbol(s), the terminal determines that the target symbol is configured as any one of a DL symbol, a UL symbol or an F symbol in the first cell and determines that the target symbol is configured as a UL symbol or an F symbol in the second cell. The terminal may determine that the target symbol is a valid symbol in the second cell of the serving cells.

In some embodiments, the terminal may configure the target symbol in the first cell as any one of a DL symbol, a UL symbol, or an F symbol through a third parameter. That is, for the CA scenario, in the case where the terminal determines that the first information indicates that the UL signal is sent in the SBFD symbol(s) and indicates that the UL signal is sent in the non-SBFD symbol(s), the target symbol is configured as any one of the DL symbol, the UL symbol or the F symbol through the third parameter in the first cell, and determines that the target symbol is configured as the UL symbol or the F symbol in the second cell. The terminal may determine that the target symbol is a valid symbol in the second cell of the serving cells.

In some embodiments, the third parameter may be tdd-UL-DL-ConfigurationCommon and/or tdd-UL-DL-ConfigurationDedicated. That is, in the CA scenario, in the case where the terminal determines that the first information indicates that the UL signal is sent in the SBFD symbol(s) and indicates that the UL signal is sent in the non-SBFD symbol(s), the target symbol is configured as any one of the DL symbol, the UL symbol or the F symbol in the first cell through the tdd-UL-DL-ConfigurationCommon and/or the tdd-UL-DL-ConfigurationDedicated, and determines that the target symbol is configured as the UL symbol or the F symbol in the second cell. The terminal may determine that the target symbol is a valid symbol in the second cell of the serving cells.

In other words, in this example, no matter what type is configured for a symbol in the first cell through the tdd-UL-DL-ConfigurationCommon and/or the tdd-UL-DL-ConfigurationDedicated, it does not affect whether the target symbol is an invalid symbol in the second cell of the serving cells configured with directionalCollisionHandling-r16=enabled. In some cases, it may be determined that no matter what type of the target symbol is configured in the first cell through the tdd-UL-DL-ConfigurationCommon and/or the tdd-UL-DL-ConfigurationDedicated, when it is determined that the target symbol is configured as the UL symbol or the F symbol in the second cell, it is further determined that the target symbol is a valid symbol in the second cell of the serving cells configured with directionalCollisionHandling-r16-enabled.

The disclosure provides a variety of preset conditions, such that possible invalid symbols are determined based on the corresponding preset conditions, thereby ensuring that in transmitting the uplink signal, the uplink signal may be sent in allowed symbols to improve the uplink communication efficiency.

In the communication method according to the embodiments of the disclosure, the first information indicates that the UL signal is sent in the SBFD symbol(s), and the preset condition includes at least one of: the non-SBFD symbol being an invalid symbol; the symbol(s) where the SSB is located being DL symbol(s), F symbol(s) or SBFD symbol(s), then the symbol(s) where the SSB is located being the invalid symbol(s); the symbol(s) where the SSB is located being SBFD symbol(s), the terminal being configured to perform measurement on the SSB, then the symbol(s) where the SSB is located being the invalid symbol(s); the symbol(s) where the Type0-PDCCH is located being DL symbol(s), F symbol(s) or SBFD symbol(s), and the symbol(s) where the Type0-PDCCH is located being the invalid symbol(s); the symbol(s) where the Type0-PDCCH is located being SBFD symbol(s), and the terminal being configured to receive DCI on the Type0-PDCCH, then the symbol(s) where the Type0-PDCCH is located being the invalid symbol(s); the N symbols after the DL symbol or the SBFD symbol being invalid symbols, where N is an integer greater than or equal to 0; a target symbol being configured as a non-SBFD symbol in the CA scenario, then the target symbol being an invalid symbol in the second cell; the target symbol being configured as an SBFD symbol in the CA scenario, and the target symbol being configured as a DL symbol in the second cell, then the target symbol being an invalid symbol in the second cell.

In some embodiments, in the case where the first information indicates that the UL signal is sent in the SBFD symbol(s), the terminal may determine the invalid symbol(s) based on any one or more of the following preset conditions. In the case where the first information indicates that the UL signal is sent in the SBFD symbol(s), the preset condition may be referred to as a second preset condition.

As an example, the terminal receives first information. The first information indicates that the UL signal is sent in the SBFD symbol(s). The terminal may then determine the invalid symbol(s) based on any one or more of the following second preset conditions.

As another example, the terminal determines that the first information indicates that the UL signal is sent in the SBFD symbol(s) based on a predefined rule. The terminal may further determine the invalid symbol(s) based on any one or more of the following second preset conditions.

In some embodiments, the second preset condition may include non-SBFD symbol(s) being the invalid symbol(s).

In some embodiments, in the case where the terminal determines that the first information indicates that the UL signal is sent in the SBFD symbol(s), the terminal may determine the non-SBFD symbol(s) and determine that the non-SBFD symbol(s) is/are the invalid symbol(s).

In some embodiments, the terminal may configure the non-SBFD symbol(s) through a third parameter. That is, in the case where the terminal determines that the first information indicates that the UL signal is sent in the SBFD symbol(s), the terminal configures the non-SBFD symbol(s) through the third parameter and determines that the non-SBFD symbol(s) is/are the invalid symbol(s).

In some embodiments, the third parameter may be tdd-UL-DL-ConfigurationCommon and/or tdd-UL-DL-ConfigurationDedicated. That is, in the case where the terminal determines that the first information indicates that the UL signal is sent in the SBFD symbol(s), the non-SBFD symbol(s) is/are configured through the tdd-UL-DL-ConfigurationCommon and/or the tdd-UL-DL-ConfigurationDedicated, and it is determined that the non-SBFD symbol(s) is/are the invalid symbol(s).

In some embodiments, the second preset condition may include that the symbol(s) where the SSB is located is/are DL symbol(s), F symbol(s), or SBFD symbol(s), then the symbol(s) where the SSB is located is/are the invalid symbol(s). The non-SBFD symbol includes any one or more of the UL symbol, the DL symbol, or the F symbol.

In some embodiments, the second preset condition may include that the symbol(s) where the SSB is located is/are SBFD symbol(s), and the terminal is configured to perform measurement on the SSB, then the symbol(s) where the SSB is located is/are the invalid symbol(s).

In some embodiments, the second preset condition may include that the symbol(s) where the Type0-PDCCH is located is/are DL symbol(s), F symbol(s), or SBFD symbol(s), then the symbol(s) where the Type0-PDCCH is located is/are the invalid symbol(s).

In some embodiments, the second preset condition may include that the symbol(s) where the Type0-PDCCH is located is/are SBFD symbol(s), and the terminal is configured to receive DCI on the Type0-PDCCH, then the symbol(s) where the Type0-PDCCH is located is/are the invalid symbol(s).

In some embodiments, the second preset condition may include that N symbols after the DL symbol or the SBFD symbol are invalid symbols, where N is an integer greater than or equal to 0.

It may be understood that for some optional implementation methods of the above-mentioned second preset condition, reference may be made to the description of the corresponding embodiments and related embodiments of the first preset condition, which is not described in detail here.

In some embodiments, the second preset condition may include that a target symbol is configured as a non-SBFD symbol in a CA scenario, then the target symbol is an invalid symbol in the second cell.

In some embodiments, for a CA scenario, in the case where the terminal determines that the first information indicates that the UL signal is sent in the SBFD symbol(s), the terminal determines that a target symbol is a non-SBFD symbol. Further, the terminal may determine that the target symbol is an invalid symbol in the second cell of the serving cells.

In some embodiments, the terminal may configure the target symbol as a non-SBFD symbol through a third parameter. That is, in a CA scenario, in the case where the terminal determines that the first information indicates that the UL signal is sent in the SBFD symbol(s), the terminal configures the target symbol as a non-SBFD symbol through the third parameter. Then, the terminal may determine that the target symbol is an invalid symbol in the second cell of the serving cells.

In some embodiments, the third parameter may be tdd-UL-DL-ConfigurationCommon and/or tdd-UL-DL-ConfigurationDedicated. That is, in the CA scenario, in the case where the terminal determines that the first information indicates that the UL signal is sent in the SBFD symbol(s), the target symbol is configured as a non-SBFD symbol through the tdd-UL-DL-ConfigurationCommon and/or the tdd-UL-DL-ConfigurationDedicated. Then, the terminal may determine that the target symbol is an invalid symbol in the second cell of the serving cells.

In some embodiments, the second preset condition may include that the target symbol is configured as a SBFD symbol in the CA scenario, and the target symbol is configured as a DL symbol in the second cell, then the target symbol is an invalid symbol in the second cell.

In some embodiments, for the CA scenario, in the case where the terminal determines that the first information indicates that the UL signal is sent in the SBFD symbol(s), it is determined that the target symbol is a SBFD symbol, and the target symbol is configured as a DL symbol in the second cell, then the terminal may determine that the target symbol is an invalid symbol in the second cell of the serving cells.

In some embodiments, the terminal may configure the target symbol as an SBFD symbol through a third parameter. That is, in the CA scenario, in the case where the terminal determines that the first information indicates that the UL signal is sent in the SBFD symbol(s), the terminal configures the target symbol as an SBFD symbol through the third parameter, and the target symbol is configured as a DL symbol in the second cell. Then, the terminal may determine that the target symbol is an invalid symbol in the second cell of the serving cells.

In some embodiments, the third parameter may be tdd-UL-DL-ConfigurationCommon and/or tdd-UL-DL-ConfigurationDedicated. That is, in the CA scenario, in the case where the terminal determines that the first information indicates that the UL signal is sent in the SBFD symbol(s), the target symbol is configured as an SBFD symbol through the tdd-UL-DL-ConfigurationCommon and/or the tdd-UL-DL-ConfigurationDedicated, and the target symbol is configured as a DL symbol in the second cell. Then, the terminal may determine that the target symbol is an invalid symbol in the second cell of the serving cells.

Certainly, in some embodiments, for the CA scenario, in the case where the terminal determines that the first information indicates that the UL signal is sent in the SBFD symbol(s), it is determined that the target symbol is configured as an SBFD symbol through the tdd-UL-DL-ConfigurationCommon and/or the tdd-UL-DL-ConfigurationDedicated, and the target symbol is configured as a UL symbol or an F symbol in the second cell. Then, the terminal may determine that the target symbol is a valid symbol in the second cell of the serving cells configured with directionalCollisionHandling-r16=enabled.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, the first information indicates that the UL signal is sent in the non-SBFD symbol(s); the preset condition includes at least one of the following: an SBFD symbol being an invalid symbol; N symbols after a DL symbol or an SBFD symbol being invalid symbols, where N is an integer greater than or equal to 0; a target symbol being configured as an SBFD symbol in the CA scenario, then the target symbol being an invalid symbol in a second cell; a target symbol being configured as a non-SBFD symbol in the CA scenario, and the target symbol being configured as a DL symbol in a second cell, then the target symbol being an invalid symbol in the second cell.

In some embodiments, in the case where the first information indicates that the UL signal is sent in the non-SBFD symbol(s), the terminal may determine the invalid symbol(s) based on any one or more of the following preset conditions. In the case where the first information indicates that the UL signal is sent in the non-SBFD symbol(s), the preset condition may be referred to as a third preset condition.

As an example, the terminal receives the first information. The first information indicates that the UL signal is sent in the non-SBFD symbol(s). The terminal may further determine the invalid symbol(s) based on any one or more of the following third preset conditions.

As another example, the terminal determines that the first information indicates that the UL signal is sent in the non-SBFD symbol(s), based on a predefined rule. The terminal may further determine the invalid symbol(s) based on any one or more of the following third preset conditions.

In some embodiments, the third preset condition may include that an SBFD symbol is an invalid symbol.

In some embodiments, in the case where the terminal determines that the first information indicates that the UL signal is sent in the non-SBFD symbol(s), the terminal may determine an SBFD symbol and determine that the SBFD symbol is an invalid symbol.

In some embodiments, the terminal may configure the SBFD symbol through a third parameter. That is, in the case where the terminal determines that the first information indicates that the UL signal is sent in the non-SBFD symbol(s), the terminal configures the SBFD symbol through the third parameter and determines that the SBFD symbol is an invalid symbol.

In some embodiments, the third parameter may be tdd-UL-DL-ConfigurationCommon and/or tdd-UL-DL-ConfigurationDedicated. That is, in the case where the terminal determines that the first information indicates that the UL signal is sent in the non-SBFD symbol(s), the terminal configures the SBFD symbol through the tdd-UL-DL-ConfigurationCommon and/or the tdd-UL-DL-ConfigurationDedicated, and determines that the SBFD symbol is an invalid symbol.

In some embodiments, the third parameter may be other information elements other than the tdd-UL-DL-ConfigurationCommon and the tdd-UL-DL-ConfigurationDedicated. That is, in the case where the terminal determines that the first information indicates that the UL signal is sent in the non-SBFD symbol(s), the SBFD symbol is configured through other information elements and it is determined that the SBFD symbol is an invalid symbol.

In some embodiments, in the case where the terminal determines that the first information indicates that the UL signal is sent in the non-SBFD symbol(s), a DL symbol may be determined and it is determined that the DL symbol is an invalid symbol.

In some embodiments, the terminal may configure the DL symbol through a third parameter. That is, in the case where the terminal determines that the first information indicates that the UL signal is sent in the non-SBFD symbol(s), the terminal configures the DL symbol through the third parameter and determines that the DL symbol is an invalid symbol.

In some embodiments, the third parameter may be tdd-UL-DL-ConfigurationCommon and/or tdd-UL-DL-ConfigurationDedicated. That is, in the case where the terminal determines that the first information indicates that the UL signal is sent in the non-SBFD symbol(s), the terminal configures the DL symbol through the tdd-UL-DL-ConfigurationCommon and/or the tdd-UL-DL-ConfigurationDedicated, and determines that the DL symbol is an invalid symbol.

In some embodiments, the third preset condition may include that N symbols after a DL symbol or an SBFD symbol are invalid symbols, where N is an integer greater than or equal to 0.

It may be understood that for some optional implementation methods of the third preset condition mentioned above, reference may be made to the description of the corresponding embodiment and related embodiments of the first preset condition and the description of the corresponding embodiment and related embodiments in the second preset condition, which are not described in detail here.

In some embodiments, the third preset condition may include that a target symbol is configured as a SBFD symbol in a CA scenario, then the target symbol is an invalid symbol in a second cell.

In some embodiments, for the CA scenario, in the case where the terminal determines that the first information indicates that the UL signal is sent in the non-SBFD symbol(s), the terminal determines that the target symbol is a SBFD symbol. Further, the terminal may determine that the target symbol is an invalid symbol in the second cell of the serving cells.

In some embodiments, the terminal may configure the target symbol as an SBFD symbol through a third parameter. That is, in the CA scenario, in the case where the terminal determines that the first information indicates that the UL signal is sent in the non-SBFD symbol(s), the terminal configures the target symbol as an SBFD symbol through the third parameter. Then, the terminal may determine that the target symbol is an invalid symbol in the second cell of the serving cells.

In some embodiments, the third parameter may be tdd-UL-DL-ConfigurationCommon and/or tdd-UL-DL-ConfigurationDedicated. That is, in the CA scenario, in the case where the terminal determines that the first information indicates that the UL signal is sent in the non-SBFD symbol(s), the target symbol is configured as an SBFD symbol through the tdd-UL-DL-ConfigurationCommon and/or the tdd-UL-DL-ConfigurationDedicated. Then, the terminal may determine that the target symbol is an invalid symbol in the second cell of the serving cells.

In some embodiments, the third preset condition may include that a target symbol is configured as a non-SBFD symbol in a CA scenario, and the target symbol is configured as a DL symbol in the second cell, then the target symbol is an invalid symbol in the second cell.

For example, in the CA scenario, in the case where the terminal determines that the first information indicates that the UL signal is sent in the non-SBFD symbol(s), it is determined that the target symbol is a non-SBFD symbol, and the target symbol is configured as a DL symbol in the second cell, then the terminal may determine that the target symbol is an invalid symbol in the second cell of the serving cells. It may be understood that in this case, different cells do not allow simultaneous transmission and reception of the signal.

In some embodiments, the terminal may configure the target symbol as a non-SBFD symbol through a third parameter. That is, in the CA scenario, in the case where the terminal determines that the first information indicates that the UL signal is sent in the non-SBFD symbol(s), the terminal configures the target symbol as a non-SBFD symbol through the third parameter, and the target symbol is configured as a DL symbol in the second cell. The terminal may then determine that the target symbol is an invalid symbol in the second cell of the serving cells.

In some embodiments, the third parameter may be tdd-UL-DL-ConfigurationCommon and/or tdd-UL-DL-ConfigurationDedicated. That is, in the CA scenario, in the case where the terminal determines that the first information indicates that the UL signal is sent in the non-SBFD symbol(s), the target symbol is configured as a non-SBFD symbol through the tdd-UL-DL-ConfigurationCommon and/or the tdd-UL-DL-ConfigurationDedicated, and the target symbol is configured as a DL symbol in the second cell. The terminal may then determine that the target symbol is an invalid symbol in the second cell of the serving cells.

Certainly, in some embodiments, for the CA scenario, in the case where the terminal determines that the first information indicates that the UL signal is sent in the non-SBFD symbol(s), it is determined that the target symbol is configured as a non-SBFD symbol through the tdd-UL-DL-ConfigurationCommon and/or the tdd-UL-DL-ConfigurationDedicated, and the target symbol is configured as a UL symbol or an F symbol in the second cell. Then, the terminal may determine that the target symbol is a valid symbol in the second cell of the serving cells configured with directionalCollisionHandling-r16=enabled.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, the preset condition includes that N symbols after a DL symbol or an SBFD symbol are invalid symbols. N includes N1 and/or N2. The N symbols are determined in at least one of the following ways: determining N1 consecutive symbols after the DL symbol; or determining N2 consecutive symbols after the SBFD symbol. In some embodiments, the preset condition may include that N symbols after the DL symbol or the SBFD symbol are invalid symbols, where N may include N1 and/or N2.

In some embodiments, N1 consecutive symbols after a DL symbol may be determined, and the N1 symbols are invalid symbols.

In some embodiments, the N1 consecutive symbols after the DL symbol may be determined in a variety of ways. For example, the N1 consecutive symbols after the DL symbol may be determined through the fourth parameter, i.e., numberOfInvalidSymbolsForDL-UL-Switching.

In some embodiments, N2 consecutive symbols after the SBFD symbol may be determined, and the N2 symbols are invalid symbols.

In some embodiments, the N2 consecutive symbols after the SBFD symbol may be determined in a variety of ways. As an example, the N2 consecutive symbols after the SBFD symbol may be determined through the fourth parameter, i.e., numberOflnvalidSymbolsForDL-UL-Switching. As another example, the N2 consecutive symbols after the SBFD symbol may be determined through a fifth parameter, i.e., numberOfInvalidSymbolsForDL-UL-Switching-SBFD.

In some embodiments, an SCS corresponding to a symbol length may be determined through referenceSubcarrierSpacing configured by the tdd-UL-DL-ConfigurationCommon.

The disclosure provides a variety of ways to determine the invalid symbol(s), thereby ensuring that in transmitting the uplink signal, the uplink signal may be sent in allowed symbols, to improve the uplink communication efficiency.

In the communication method according to the embodiments of the disclosure, N1 and/or N2 are determined based on the same parameter; and/or N1 and/or N2 are determined based on different parameters.

In some embodiments, N1 and/or N2 may be determined based on the same parameter. The same parameter may be, for example, the fourth parameter, i.e., numberOflnvalidSymbolsForDL-UL-Switching.

In some embodiments, N1 consecutive symbols after the DL symbol are determined based on the numberOfInvalidSymbolsForDL-UL-Switching, and the N1 consecutive symbols are invalid symbols. Also, N2 consecutive symbols after the SBFD symbol are determined based on the numberOflnvalidSymbolsForDL-UL-Switching, and the N2 consecutive symbols are invalid symbols.

In some embodiments, N1 and/or N2 may be determined based on different parameters. For example, N1 may be determined through the fourth parameter, i.e., numberOfInvalidSymbolsForDL-UL-Switching, and/or N2 may be determined through the fifth parameter, i.e., numberOfInvalidSymbolsForDL-UL-Switching-SBFD.

The disclosure provides a variety of ways to determine the invalid symbol(s), thereby ensuring that in transmitting the uplink signal, the uplink signal may be sent in allowed symbols, such that the uplink communication efficiency may be improved.

In the communication method according to the embodiments of the disclosure, N1 and/or N2 may be configured to be 0; and/or N2 and N1 may be the same or different.

In some embodiments, N1 consecutive symbols after the DL symbol may be configured as 0 symbol, which means that the next symbol after the DL symbol is not an invalid symbol, or the next symbol after the DL symbol may be considered to be a valid symbol.

In some embodiments, the N2 consecutive symbols after the SBFD symbol may be configured as 0 symbol, which means that the symbol next to the SBFD symbol is not an invalid symbol, or the symbol next to the SBFD symbol may be considered to be a valid symbol.

In some embodiments, the N1 consecutive symbols after the DL symbol may be configured as 0 symbol, and the N2 consecutive symbols after the SBFD symbol may be configured as 0 symbol. That is, it means that the next symbol of the DL symbol is not an invalid symbol or the next symbol of the DL symbol may be considered to be a valid symbol, and it means that the next symbol of the SBFD symbol is not an invalid symbol or the next symbol of the SBFD symbol may be considered to be a valid symbol.

In some embodiments, the number of N1 consecutive symbols after the DL symbol is the same as the number of N2 consecutive symbols after the SBFD symbol.

For example, it may be determined that the number configured through the numberOflnvalidSymbolsForDL-UL-Switching-SBFD is the same as the number configured through the numberOflnvalidSymbolsForDL-UL-Switching.

Or in the case where there is no numberOfInvalidSymbolsForDL-UL-Switching-SBFD, N2 consecutive symbols after the SBFD symbol may be determined through the numberOflnvalidSymbolsForDL-UL-Switching. That is, N1 configured through numberOflnvalidSymbolsForDL-UL-Switching is also used as N2.

The disclosure provides a possible situation for the number of consecutive symbols after the DL symbol and/or the SBFD symbol, and the consecutive symbols are determined as invalid symbols, thereby ensuring that in transmitting the uplink signal, the uplink signal may be sent in allowed symbols, such that the uplink communication efficiency may be improved.

In the communication method according to the embodiments of the disclosure, the preset condition may also include at least one of the following: a DL symbol being an invalid symbol; symbol(s) where the SSB is located being the invalid symbol(s); symbol(s) where the Type0-PDCCH is located being the invalid symbol(s); N3 symbols after a DL symbol being invalid symbols, where N3 is an integer greater than or equal to 1; a target symbol being configured as a DL symbol in a first cell, then the target symbol being an invalid symbol in a second cell.

In some embodiments, the preset condition may further include that a DL symbol is an invalid symbol.

In some embodiments, no matter what is indicated by the first information, that is, regardless of the first preset condition, the second preset condition and/or the third preset condition, the DL symbol is determined as an invalid symbol.

In some embodiments, the DL symbol may be configured through the third parameter. That is, the third parameter configures the DL symbol, and the DL symbol is an invalid symbol.

In some embodiments, the third parameter may be tdd-UL-DL-ConfigurationCommon and/or tdd-UL-DL-ConfigurationDedicated. That is, tdd-UL-DL-ConfigurationCommon and/or tdd-UL-DL-ConfigurationDedicated configures a DL symbol, and the DL symbol is an invalid symbol.

In some embodiments, the preset condition may also include that symbol(s) where the SSB is located is/are the invalid symbol(s).

In some embodiments, no matter what is indicated by the first information, that is, regardless of the first preset condition, the second preset condition and/or the third preset condition, the symbol(s) where the SSB is located is/are determined, and the symbol(s) where the SSB is located is/are the invalid symbol(s).

In some embodiments, the symbol(s) where the SSB is located may be configured through the first parameter. That is, the symbol(s) where the SSB is located is/are configured through the first parameter, and the symbol(s) where the SSB is located is/are the invalid symbol(s).

In some embodiments, the first parameter may be ssb-PositionsInBurst. That is, the ssb-PositionsInBurst configures the symbol(s) where the SSB is located, and the symbol(s) where the SSB is located is/are the invalid symbol(s).

In some embodiments, the preset condition may further include that symbol(s) where the Type0-PDCCH is located is/are the invalid symbol(s).

In some embodiments, no matter what is indicated by the first information, that is, regardless of the first preset condition, the second preset condition and/or the third preset condition, the symbol(s) where the Type0-PDCCH is located is/are determined, and the symbol(s) where the Type0-PDCCH is located is/are the invalid symbol(s).

In some embodiments, the symbol(s) where the Type0-PDCCH is located may be configured through the second parameter. That is, the symbol(s) where the Type0-PDCCH is located is/are configured through the second parameter, and the symbol(s) where the Type0-PDCCH is located is/are the invalid symbol(s).

In some embodiments, the second parameter may be PDCCH-ConfigSIB1. That is, PDCCH-ConfigSIB1 configures the symbol(s) where Type0-PDCCH is located, and the symbol(s) where Type0-PDCCH is located is/are the invalid symbol(s).

In some embodiments, the preset condition may further include configuring N3 symbols after a DL symbol, and determining the N3 symbols as invalid symbols, where N3 is an integer greater than or equal to 1.

In some embodiments, no matter what is indicated by the first information, that is, regardless of the first preset condition, the second preset condition and/or the third preset condition, N3 symbols after the DL symbol are configured, where N3 is an integer greater than or equal to 1, and the terminal determines that the N3 symbols after the DL symbol are invalid symbols. The SCS corresponding to the symbol length may be determined through the referenceSubcarrierSpacing configured by tdd-UL-DL-ConfigurationCommon.

In some embodiments, N3 symbols after the DL symbol may be configured through a third parameter.

In some embodiments, the third parameter may be tdd-UL-DL-ConfigurationCommon and/or tdd-UL-DL-ConfigurationDedicated. It may be understood that in each embodiment of the disclosure, the third parameter may be the tdd-UL-DL-ConfigurationCommon and/or the tdd-UL-DL-ConfigurationDedicated.

In some embodiments, the preset condition may further include that a target symbol is configured as a DL symbol in a first cell, then the target symbol is an invalid symbol in a second cell.

In some embodiments, no matter what is indicated by the first information, that is, regardless of the first preset condition, the second preset condition and/or the third preset condition, for the CA scenario, it is determined that the target symbol is configured as a DL symbol in the first cell. Then, the terminal may determine that the target symbol is an invalid symbol in the second cell of the serving cells. The first cell is a reference cell, and the second cell is a cell other than the reference cell in the serving cells.

In some embodiments, the target symbol may be configured as a DL symbol in the first cell through a third parameter.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, in the target symbol, the first cell is a cell with the smallest cell index among a first cell group. A third cell in the first cell group is an activated serving cell. The third cell is any cell in the first cell group, and the third cell satisfies at least one of the following conditions: a symbol category corresponding to the third cell being configured as an F symbol, and in the third cell, the terminal being configured to send one or more of an SRS, a physical uplink control channel (PUCCH), a PUSCH or a physical random access channel (PRACH); the symbol corresponding to the third cell being configured as an F symbol, and in the third cell, the terminal being configured to receive one or more of a PDCCH, a PDSCH or a CSI-RS; or the symbol category corresponding to the third cell being configured as a DL symbol or a UL symbol.

In some embodiments, the first cell may also be referred to as a reference cell.

In some embodiments, the first cell group includes multiple cells, and the multiple cells are activated serving cells. The first cell may be a cell with the smallest index in the first cell group.

In some embodiments, any cell in the first cell group may be referred to as a third cell. The third cell is an activated serving cell and satisfies at least one of the following conditions: the symbol category corresponding to the third cell being configured as a DL symbol or a UL symbol; the symbol category corresponding to the third cell being configured as an F symbol, and the terminal being configured to send one or more of an SRS, a PUCCH, a PUSCH, or an PRACH in the third cell; the symbol category corresponding to the third cell being configured as an F symbol, and terminal being configured to receive one or more of a PDCCH, a PDSCH or a CSI-RS in the third cell.

In some embodiments, the second cell is a cell of the serving cells other than the first cell, and the second cell satisfies at least one of the following conditions: the second cell being an activated serving cell; the second cell being configured to perform conflict handling on conflicts generated between the second cell and the first cell.

It is noteworthy that in each embodiment of the disclosure, there is no direct relationship between the second cell and the first cell group. For example, a cell other than the first cell in the first cell group may be a second cell or may not be a second cell. For example, in the case that directionalCollisionHandling-r16=enabled is configured for a cell other than the first cell in the first cell group, it may be considered that the cell is a second cell. In addition, it is possible that the second cell does not belong to the first cell group. For example, for other serving cells outside the first cell group, in the case where directionalCollisionHandling-r16=enabled is configured, they may also be considered as second cells.

In some embodiments, in the target symbol, the first cell may be a reference cell, and the first cell is the cell with the smallest cell index in the first cell group. Any cell in the first cell group may be an activated serving cell, that is, each cell in the first cell group is an activated serving cell. The symbol category corresponding to any cell in the first cell group is configured as an F symbol, and the terminal is configured to send one or more of an SRS, a PUCCH, a PUSCH or a PRACH in the cell. It may be understood that the target symbol may be an invalid symbol or a valid symbol.

For example, the first cell is a reference cell and is the cell with the smallest index in the first cell group. It may be understood that since each cell in the first cell group is an activated serving cell, the first cell is also an activated serving cell. For the first cell group, in the case where the corresponding symbol category of any cell in the first cell group is configured as an F symbol, the terminal is configured to send one or more of an SRS, a PUCCH, a PUSCH or a PRACH in the cell.

In some embodiments, in the target symbol, the first cell may be a reference cell, and the first cell is a cell with the smallest cell index in the first cell group. Any cell in the first cell group may be an activated serving cell, that is, each cell in the first cell group is an activated serving cell. The symbol category corresponding to any cell in the first cell group is configured as an F symbol, and the terminal is configured to receive one or more of a PDCCH, a PDSCH or a CSI-RS in the cell.

For example, the first cell is a reference cell and is the cell with the smallest index in the first cell group. It may be understood that since each cell in the first cell group is an activated serving cell, the first cell is also an activated serving cell. For the first cell group, in the case where the corresponding symbol category of any cell in the first cell group is configured as an F symbol, the terminal is configured to receive one or more of a PDCCH, a PDSCH or a CSI-RS in the cell.

In some embodiments, in the target symbol, the first cell may be a reference cell, and the first cell is a cell with the smallest cell index in the first cell group. Any cell in the first cell group may be an activated serving cell, that is, each cell in the first cell group is an activated serving cell. The symbol category corresponding to any cell in the first cell group is configured as a UL symbol or a DL symbol.

For example, the first cell is a reference cell and is the cell with the smallest index in the first cell group. It may be understood that since each cell in the first cell group is an activated serving cell, the first cell is also an activated serving cell. For the first cell group, the symbol category corresponding to any cell in the first cell group is configured as a UL symbol through the tdd-UL-DL-ConfigurationCommon and/or the tdd-UL-DL-ConfigurationDedicated. Or the symbol category corresponding to any cell in the first cell group is configured as a DL symbol through the tdd-UL-DL-ConfigurationCommon and/or the tdd-UL-DL-ConfigurationDedicated.

In some embodiments, in the CA scenario, the first cell is a reference cell and may be selected in the following manner. For example, in the case where the terminal does not support simultaneous transmission and reception between any two inter-band cells, the first cell is the cell with the smallest index in the first cell group. Or in the case where the terminal supports simultaneous transmission and reception between any two inter-band cells, one first cell may be selected per band. For example, the first cell group on each band is determined, and the first cell is determined in the first cell group on each band. The first cell in the first cell group on each band may be the cell with the smallest index in the first cell group on the band.

The disclosure provides first cell satisfying conditions, to determine possible invalid symbols in the CA scenario, thereby ensuring that in transmitting an uplink signal, the uplink signal may be sent in allowed symbols, such that the uplink communication efficiency may be improved.

In the communication method according to an embodiment of the disclosure, in the target symbol, the second cell is a cell other than the first cell in the serving cells, and satisfies at least one of the following conditions: the second cell being an activated serving cell; or the second cell being configured to perform conflict handling on the conflict generated between the second cell and the first cell.

In some embodiments, in the target symbol, the second cell is a cell other than the first cell in the serving cells.

It may be understood that since the second cell has no direct relationship with the first cell group, it may be considered that the symbol corresponding to the second cell does not need to meet the conditions of the first cell group. For example, it does not need to be configured as a DL symbol or a UL symbol, or it does not need to be configured as an F symbol and to send one or more of an SRS, a PUCCH, a PUSCH or a PRACH, or it does not need to be configured as an F symbol and to receive one or more of a PDCCH, a PDSCH or a CSI-RS.

In some embodiments, the second cell is an activated serving cell.

In some embodiments, the second cell is configured to perform conflict handling on the conflict between the second cell and the first cell. For example, the second cell is configured with directionalCollisionHandling-r16=enabled, so that when a conflict occurs between the first cell and the second cell, the second cell may perform the conflict handling to avoid the conflict affecting the communication of the second cell.

In some embodiments, the second cell is an activated serving cell, and the second cell is configured to perform the conflict handling on a conflict generated between the second cell and the first cell.

It may be understood that regarding the first cell group, reference may be made to the description of the above-mentioned embodiments of the first cell and related embodiments, which is not described in detail here.

The disclosure provides second cell satisfying conditions, to determine possible invalid symbols in the CA scenario, thereby ensuring that in transmitting the uplink signal, the uplink signal may be sent in allowed symbols, such that the uplink communication efficiency may be improved.

In the communication method according to the embodiments of the disclosure, FIG. 7 is a flowchart illustrating another communication method according to an example embodiment. As illustrated in FIG. 7, the method may further include the following.

In step S21, second information is received.

In some embodiments, the terminal may also receive second information. The second information indicates that the terminal sends a UL signal.

For example, the terminal may also receive the second information sent by the network device. The second information indicates that the terminal sends the UL signal.

For example, the terminal receives an RRC and/or a DCI to indicate that the terminal sends a PUSCH. For example, it may indicate that the terminal sends a PUSCH repetition type B.

In some embodiments, determining the invalid symbol(s) in the symbol where the UL signal is located based on the first information in S12 may further include the following.

In step S22, the invalid symbol(s) is/are determined in the symbols where the UL signal is located based on the first information and the second information.

In some embodiments, the terminal may determine the invalid symbol(s) in the symbols where the UL signal is located based on the first information determined in S11 and the second information received in S21.

For example, the terminal determines that the first information indicates that the UL signal is sent in at least one of the SBFD symbol(s) or the non-SBFD symbol(s), and determines the invalid symbol(s) in the symbols where the UL signal is located based on a corresponding preset rule and some parameters configured for sending the UL signal in the second information.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

In the communication method according to the embodiments of the disclosure, determining the first information in S11 may include: receiving the first information.

In some embodiments, the terminal may receive first information sent by the network device to determine that the first information indicates that the UL signal is sent in at least one of the SBFD symbol(s) or the non-SBFD symbol(s).

As an example, the terminal receives the first information sent by the network device. The first information indicates that the UL is allowed to be sent in the SBFD symbol and in the non-SBFD symbol.

As another example, the terminal receives the first information sent by the network device. The first information indicates that the UL is allowed to be sent in the SBFD symbol.

As another example, the terminal receives the first information sent by the network device. The first information indicates that the UL is allowed to be sent in the non-SBFD symbol.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

Based on the same concept, the embodiments of the disclosure also provide a communication method performed by a network device.

FIG. 8 is a flowchart illustrating another communication method according to an example embodiment. As illustrated in FIG. 8, the method is performed by a network device and may include the following.

In step S31, first information is sent.

In some embodiments, the network device may send the first information. The first information indicates that the terminal sends a UL signal in at least one of a SBFD symbol or a non-SBFD symbol.

For example, the network device sends the first information to the terminal, such that the terminal receives the first information sent by the network device and determines to send the UL signal in the SBFD symbol and/or in the non-SBFD symbol based on the first information.

In some embodiments, the symbols where the UL signal is located include invalid symbol(s). The invalid symbol may be understood as a symbol in which the terminal is not allowed to send the UL signal.

As an example, in the case that the first information indicates that the terminal is allowed to send a UL signal in the SBFD symbol, the symbols where the UL signal is located may include an SBFD symbol.

As another example, in the case where the first information indicates that the terminal is allowed to send a UL signal in the non-SBFD symbol, the symbols where the UL signal is located may include a non-SBFD symbol.

As another example, in the case where the first information indicates that the terminal is allowed to send UL signals in the SBFD symbol and in the non-SBFD symbol, the symbols where the UL signal is located may include an SBFD symbol and/or a non-SBFD symbol.

Certainly, in some embodiments, the method may further include the following.

In step S32, the UL signal is received.

In some embodiments, the network device may receive the UL signal sent by the terminal in valid symbol(s).

The disclosure determines possible invalid symbols by indicating whether data is allowed to be sent in at least one of the SBFD symbol or the non-SBFD symbol, thereby ensuring that in transmitting the uplink signal, the uplink signal is sent in allowed symbols, such that the uplink communication efficiency may be improved.

In the communication method according to the embodiments of the disclosure, the invalid symbol(s) is/are determined in following manner: determining the invalid symbol(s) based on a preset condition corresponding to the first information.

In some embodiments, the invalid symbol(s) may be determined based on the preset condition corresponding to the first information.

It may be understood that for the corresponding embodiments of the network device, reference may be made to the description of the corresponding embodiments on the terminal side and the related embodiments, which is not described in detail here.

The disclosure may adopt appropriate preset conditions to determine the invalid symbol(s) depending on different situations indicated by the first information, thereby ensuring that in transmitting the uplink signal, the uplink signal may be sent in allowed symbols, such that the uplink communication efficiency may be improved.

In the communication method according to the embodiments of the disclosure, the first information indicates that the UL signal is sent in the SBFD symbol(s) and indicates that the UL signal is sent in the non-SBFD symbol(s), and the preset condition includes at least one of the following: symbol(s) where the SSB is located being DL symbol(s) or F symbol(s), then the symbol(s) where the SSB is located being the invalid symbol(s); symbol(s) where the SSB is located being DL symbol(s), F symbol(s) or SBFD symbol(s), then the symbol(s) where the SSB is located being the invalid symbol(s); symbol(s) where the SSB is located being SBFD symbol(s) and the terminal being configured to perform measurement on the SSB, then the symbol(s) where the SSB is located being the invalid symbol(s); symbol(s) where the Type0-PDCCH is located being DL symbol(s) or F symbol(s), then the symbol(s) where the Type0-PDCCH is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where Type0-PDCCH is located being SBFD symbol(s) and the terminal being configured to receive DCI on Type0-PDCCH, then the symbol(s) where Type0-PDCCH is located being the invalid symbol(s); N symbols after a DL symbol or a SBFD symbol being the invalid symbols, where N is an integer greater than or equal to 0; a target symbol being configured as a DL symbol in a first cell and the target symbol being a non-SBFD symbol in the CA scenario, then the target symbol being an invalid symbol in a second cell, in which serving cells include the first cell and the second cell, and the second cell is a cell other than the first cell in the serving cells; a target symbol being configured as any one of a DL symbol, a UL symbol and an F symbol in a first cell and the target symbol being configured as a UL symbol or an F symbol in a second cell, then the target symbol being a valid symbol in the second cell.

It may be understood that for the various embodiments of the preset conditions, reference may be made to the description of the corresponding embodiments on the terminal side and their associated embodiments, which are not described in detail here.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, the first information indicates that the UL signal is sent in the SBFD symbol(s); the preset condition includes at least one of the following: a non-SBFD symbol being an invalid symbol; symbols where the SSB is located being DL symbol(s), F symbol(s) or SBFD symbol(s), then the symbol(s) where the SSB is located being the invalid symbol(s); symbol(s) where the SSB is located being SBFD symbol(s), and the terminal being configured to perform measurement on the SSB, then the symbol(s) where the SSB is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where the Type0-PDCCH is located being SBFD symbol(s), and the terminal being configured to receive DCI on the Type0-PDCCH, then the symbol(s) where the Type0-PDCCH is located being the invalid symbol(s); N symbols after a DL symbol or an SBFD symbol being invalid symbols, where N is an integer greater than or equal to 0; a target symbol being configured as a non-SBFD symbol in a CA scenario, then the target symbol being an invalid symbol in a second cell; a target symbol being configured as an SBFD symbol in a CA scenario, and the target symbol being configured as a DL symbol in a second cell, then the target symbol being an invalid symbol in the second cell.

It may be understood that for various embodiments of the preset condition, reference may be made to the description of the corresponding embodiments on the terminal side and their associated embodiments, which are not described in detail here.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to embodiments of the disclosure, the first information indicates that the UL signal is sent in the non-SBFD symbol(s); and the preset condition includes at least one of the following: an SBFD symbol being an invalid symbol; N symbols after a DL symbol or an SBFD symbol being invalid symbols, where N is an integer greater than or equal to 0; a target symbol being configured as an SBFD symbol in a CA scenario, then the target symbol being an invalid symbol in a second cell; a target symbol being configured as a non-SBFD symbol in a CA scenario, and the target symbol being configured as a DL symbol in a second cell, then the target symbol being an invalid symbol in the second cell.

It may be understood that for various embodiments of the preset condition, reference may be made to the description of the corresponding embodiments on the terminal side and their associated embodiments, which are not described in detail here.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, the preset condition includes N symbols after a DL symbol or an SBFD symbol being invalid symbols; where N includes N1 and/or N2. The N symbols are determined in at least one of the following ways: determining N1 consecutive symbols after the DL symbol; or determining N2 consecutive symbols after the SBFD symbol.

It may be understood that for each embodiment of determining N, reference may be made to the description of the corresponding embodiment on the terminal side and its associated embodiments, which are not described in detail here.

The disclosure provides a variety of ways to determine the consecutive symbols after the DL symbol and/or SBFD symbol, and determines the consecutive symbols as the invalid symbols, thereby ensuring that in transmitting the uplink signal, the uplink signal may be sent in allowed symbols, such that uplink communication efficiency may be improved.

In the communication method according to the embodiments of the disclosure, N1 and/or N2 are determined based on the same parameter; and/or N1 and/or N2 are determined based on different parameters.

It may be understood that for various embodiments of determining N1 and/or N2, reference may be made to the description of the corresponding embodiments on the terminal side and their associated embodiments, which are not described in detail here.

The disclosure provides a variety of ways to determine the invalid symbol(s), thereby ensuring that in transmitting the uplink signal, the uplink signal may be sent in allowed symbols, such that uplink communication efficiency may be improved.

In the communication method according to the embodiments of the disclosure, N1 and/or N2 are configured to be 0; and/or N2 is the same as N1.

It may be understood that for various embodiments of configuring N1 and/or N2, reference may be made to the description of the corresponding embodiments on the terminal side and their associated embodiments, which are not described in detail here.

The disclosure provides various ways to determine the invalid symbol(s), thereby ensuring that in transmitting the uplink signal, the uplink signal may be sent in allowed symbols, such that the uplink communication efficiency may be improved.

In the communication method according to the embodiments of the disclosure, the preset conditions may also include at least one of the following: a DL symbol being an invalid symbol; symbol(s) where the SSB is located being the invalid symbol(s); symbol(s) where the Type0-PDCCH is located being the invalid symbol(s); N3 symbols after the DL symbol being invalid symbols, where N3 is an integer greater than or equal to 1; a target symbol being configured as a DL symbol in a first cell, then the target symbol being an invalid symbol in a second cell.

It may be understood that for various embodiments of the preset condition, reference may be made to the description of the corresponding embodiments on the terminal side and their associated embodiments, which are not described in detail here.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In the communication method according to the embodiments of the disclosure, in the target symbol, the first cell is the cell with the smallest cell index in a first cell group. The third cell in the first cell group is an activated serving cell, the third cell is any cell in the first cell group, and the third cell satisfies at least one of the following conditions: a symbol category corresponding to the third cell being configured as an F symbol, and the terminal is configured to send one or more of an SRS, a PUCCH, a PUSCH or a PRACH in the third cell; a symbol corresponding to the third cell being configured as an F symbol, and the terminal is configured to receive one or more of a PDCCH, a PDSCH or a CSI-RS; or a symbol category corresponding to the third cell being configured as a DL symbol or a UL symbol.

It may be understood that for various embodiments of the first cell, reference may be made to the description of the corresponding embodiments on the terminal side and their associated embodiments, which are not described in detail here.

The disclosure provides first cell satisfying conditions to determine possible invalid symbols in the CA scenario, thereby ensuring that in transmitting the uplink signal, the uplink signal may be sent in allowed symbols, such that the uplink communication efficiency may be improved.

In the communication method according to the embodiments of the disclosure, in the invalid symbol(s) or the valid symbol(s), the second cell is a cell other than the first cell in the serving cells, and the second cell satisfies at least one of the following conditions: the second cell being an activated serving cell; or the second cell being configured to perform conflict handling on a conflict generated between the second cell and the first cell.

It may be understood that for various embodiments of the second cell, reference may be made to the description of the corresponding embodiments on the terminal side and their associated embodiments, which are not described in detail here.

The disclosure provides second cell satisfying conditions to determine possible invalid symbols in the CA scenario, thereby ensuring that in transmitting the uplink signal, the uplink signal may be sent in allowed symbols, such that the uplink communication efficiency may be improved.

In the communication method according to the embodiments of the disclosure, FIG. 9 is a flowchart illustrating another communication method according to an example embodiment. As illustrated in FIG. 9, the method may further include the following.

In step S21, the second information is sent.

In some embodiments, the network device may further send the second information, where the second information is configured to instruct the terminal to send a UL signal.

For example, the network device sends the second information to the terminal, where the second information is configured to instruct the terminal to send a UL signal.

For example, the network device sends RRC and/or DCI to instruct the terminal to send PUSCH. For example, the terminal may be instructed to send PUSCH repetition type B.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

In the communication method according to the embodiments of the disclosure, a communication system is provided. The communication system may include a terminal and a network device. The network device may be a network device corresponding to the first cell and/or the second cell. The system includes that: the network device sends first information to the terminal, the first information indicates that the terminal sends a UL signal in at least one of an SBFD symbol and a non-SBFD symbol; the terminal determines the first information; the terminal determines invalid symbol(s) in the symbols where the UL signal is located based on the first information, the invalid symbol represents a symbol in which sending the UL signal is not allow; the terminal determines valid symbol(s) in the symbols where the UL signal is located based on the invalid symbol(s); and the terminal sends the UL signal to the network device based on the valid symbol(s).

In the communication method according to the embodiments of the disclosure, a communication system is provided. The communication system may include a terminal and a network device. The network device may include a first network device and a second network device. The first network device is a network device corresponding to the first cell. The second network device is a network device corresponding to the second cell. The system includes that: the network device sends a first information to the terminal, the first information indicates that the terminal sends a UL signal in at least one of the SBFD symbol or the non-SBFD symbol; the terminal determines the first information; the terminal determines the invalid symbol(s) in the symbols where the UL signal is located based on the first information, the invalid symbol represents a symbol in which sending the UL signal is not allowed; the terminal determines valid symbol(s) in the symbols where the UL signal is located based on the invalid symbol(s); the terminal sends the UL signal to the second network device based on the valid symbol(s), the first cell is the cell with the smallest cell index in a first cell group, and any one of the cells in the first cell group is an activated serving cell. The second cell is a cell other than the first cell in the serving cells, and the second cell satisfies at least one of the following conditions: the second cell being an activated serving cell; or the second cell being configured to perform conflict handling on the conflict generated between the second cell and the first cell.

In some embodiments, for the embodiments corresponding to the first cell group, reference may be made to the corresponding embodiments in the above-mentioned embodiments on the terminal side and/or the embodiments on the network device side and the description of their related embodiments, which are not described in detail here.

Next, the solution involved in the disclosure will be described in more specific embodiments.

In some embodiments, the following multiple conditions may be set, each condition may include one or more solutions. It is understood that each solution may represent a preset condition under the condition.

Condition 1: Related to symbol category:
Scheme 3-1-0: The symbol configured as DL through tdd-UL-DL-ConfigurationCommon and/or tdd-UL-DL-ConfigurationDedicated.
Solution 3-1-1: The symbol configured as a non-SBFD symbol through tdd-UL-DL-ConfigurationCommon and/or tdd-UL-DL-ConfigurationDedicated.
Solution 3-1-2: The symbol configured as DL through tdd-UL-DL-ConfigurationCommon and/or tdd-UL-DL-ConfigurationDedicated or configured as an SBFD symbol through other information elements.

Condition 2: Related to SSB:
Solution 3-2-0: The symbol(s) where the SSB is located configured by ssb-PositionsInBurst.
Solution 3-2-1: The symbol(s) where the SSB is located configured through ssb-PositionsInBurst, and the symbol(s) being DL or F.
Solution 3-2-2: The symbol(s) where the SSB is located configured through ssb-PositionsInBurst and the symbol(s) being DL or F; or the symbol(s) being SBFD, and satisfying that the RRC configures that the UE performs measurement on the SSB.

Condition 3: Related to Type0-PDCCH:
Scheme 3-3-0: The symbol(s) where Type0-PDCCH is located configured through PDCCH-ConfigSIB1.
Scheme 3-3-1: The symbol(s) where CCS#0 is located configured through PDCCH-ConfigSIB1, and the symbol(s) being DL or F.
Solution 3-3-2: The symbol(s) where CCS#0 is located configured through PDCCH-ConfigSIB1, and the symbol(s) being DL or F; or the symbol(s) being SBFD symbol(s), and satisfying that the RRC configures that the UE receives DCI on CCS#0.

Condition 4: Related to numberOfInvalidSymbolsForDL-UL-Switching:
Solution 3-4-0: numberOfInvalidSymbolsForDL-UL-Switching symbols after DL configured through tdd-UL-DL-ConfigurationCommon and/or tdd-UL-DL-ConfigurationDedicated, and the SCS corresponding to the symbol length is referenceSubcarrierSpacing configured in tdd-UL-DL-ConfigurationCommon.
Scheme 3-4-1: numberOfInvalidSymbolsForDL-UL-Switching symbols after DL, numberOfInvalidSymbolsForDL-UL-Switching symbols after an SBFD symbol are configured through tdd-UL-DL-ConfigurationCommon and/or tdd-UL-DL-ConfigurationDedicated. The SCS corresponding to the symbol length is referenceSubcarrierSpacing configured through tdd-UL-DL-ConfigurationCommon.

Optionally, RRC configures numberOfInvalidSymbolsForDL-UL-Switching-SBFD, and numberOfInvalidSymbolsForDL-UL-Switching-SBFD symbols after the SBFD symbol are invalid symbols.

Optionally, numberOfInvalidSymbolsForDL-UL-Switching-SBFD may be configured as 0.

Optionally, when numberOfInvalidSymbolsForDL-UL-Switching-SBFD is not configured, numberOfInvalidSymbolsForDL-UL-Switching-SBFD = numberOfInvalidSymbolsForDL-UL-Switching.

Condition 5: Related to CA scenario:
Solution 3-5-0: A symbol is configured as DL through tdd-UL-DL-ConfigurationCommon and/or tdd-UL-DL-ConfigurationDedicated of the reference cell, then the symbol is an invalid symbol in other cells of the serving cells configured with directionalCollisionHandling-r16=enabled.
Scheme 3-5-1: A symbol is configured as DL through tdd-UL-DL-ConfigurationCommon and/or tdd-UL-DL-ConfigurationDedicated of the reference cell and is a non-SBFD symbol in the CA scenario, and the symbol is an invalid symbol in other cells of the serving cells configured with directionalCollisionHandling-r16=enabled.
Solution 3-5-2: The symbol category of a symbol configured through tdd-UL-DL-ConfigurationCommon and/or tdd-UL-DL-ConfigurationDedicated of the reference cell does not affect whether the symbol is an invalid symbol in other cells of the serving cells configured with directionalCollisionHandling-r16=enabled.
Solution 3-5-3: A symbol is a non-SBFD symbol in the CA scenario, and the symbol is an invalid symbol in other cells of the serving cells configured with directionalCollisionHandling-r16=enabled.
Solution 3-5-4: A symbol is an SBFD symbol in the CA scenario, and the symbol is an invalid symbol in other cells of the serving cells configured with directionalCollisionHandling-r16=enabled.

It may be understood that in some cases, tdd-UL-DL-ConfigurationDedicated may not be configured. Or tdd-UL-DL-ConfigurationDedicated is configured only in some specific cases. Certainly, the disclosure does not limit the specific scenarios of configuring or not configuring tdd-UL-DL-ConfigurationDedicated.

In some embodiments, PUSCH may be sent in the SBFD symbol and the non-SBFD symbol at the same time. Any one or more of the above-mentioned solutions 3-1-0, 3-2-0, 3-2-1, 3-2-2, 3-3-0, 3-3-1, 3-3-2, 3-4-0, 3-4-1, 3-5-0, 3-5-1 or 3-5-2 may be adopted.

In some embodiments, PUSCH may only be sent in the SBFD. Any one or more of the above-mentioned solutions 3-1-0, 3-1-1, 3-2-0, 3-2-2, 3-3-0, 3-3-2, 3-4-0, 3-4-1, 3-5-0, 3-5-2 or 3-5-3 may be adopted.

In some embodiments, PUSCH may only be transmitted in the non-SBFD. Any one or more of the above-mentioned schemes 3-1-0, 3-1-2, 3-2-0, 3-3-0, 3-4-0, 3-4-1, 3-5-0, 3-5-2 or 3-5-4 may be adopted.

It should be noted that those skilled in the art may understand that the various implementation methods/embodiments involved in the embodiments of the disclosure may be used in conjunction with the afore-mentioned embodiments or may be used separately. Whether used alone or in conjunction with the afore-mentioned embodiments, the implementation principle is similar. In the implementation of the disclosure, some embodiments are described in terms of implementation methods used together. Certainly, those skilled in the art may understand that such examples are not limitations of the embodiments of the disclosure.

Based on the same concept, the embodiments of the disclosure also provide communication apparatuses.

It is understandable that the communication apparatuses according to the embodiments of the disclosure include a hardware structure and/or software module corresponding to each function to realize the above functions. In combination with the units and algorithm steps of each example according to the embodiments of the disclosure, the embodiments of the disclosure may be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of the embodiments of the disclosure.

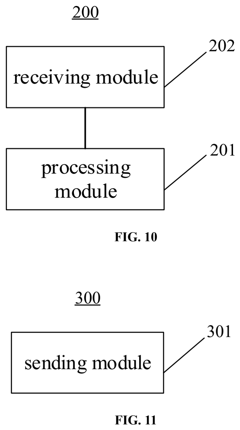

FIG. 10 is a schematic diagram illustrating a communication apparatus according to an example embodiment. As illustrated in FIG. 10, the apparatus 200 includes: a processing module 201 configured to determine first information, in which the first information indicates that a UL signal is sent in at least one of an SBFD symbol(s) or a non-SBFD symbol(s). The processing module 201 is further configured to, based on the first information, determine invalid symbol(s) in symbols where the UL signal is located, in which the invalid symbol represents a symbol in which sending the UL signal is not allowed.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

In some implementations, the processing module 201 is further configured to: determine the invalid symbol(s) based on a preset condition, in which the preset condition corresponds to the first information.

The disclosure may adopt appropriate preset conditions to determine the invalid symbol(s) depending on different situations indicated by the first information, thereby ensuring that in transmitting the uplink signal, the uplink signal may be sent in allowed symbols, such that the uplink communication efficiency may be improved.

In some embodiments, the first information indicates that the UL signal is sent in the SBFD symbol(s) and indicates that the UL signal is sent in the non-SBFD symbol(s); and the preset condition includes at least one of the following: symbol(s) where the SSB is located DL symbol(s) or F symbol(s), then the symbol(s) where the SSB is located being the invalid symbol(s); symbol(s) where the SSB is located being DL symbol(s), F symbol(s) or SBFD symbol(s), then the symbol(s) where the SSB is located being the invalid symbol(s); symbol(s) where the SSB is located being SBFD symbol(s), and the terminal being configured to perform measurement on the SSB, then the symbol(s) where the SSB is located being the invalid symbol(s); symbol(s) where the Type0-PDCCH is located being DL symbol(s) or F symbol(s), then the symbol(s) where the Type0-PDCCH is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where Type0-PDCCH is located being SBFD symbol(s), and the terminal being configured to receive DCI on the Type0-PDCCH, then the symbol(s) where Type0-PDCCH is located being the invalid symbol(s); N symbols after the DL symbol or the SBFD symbol being invalid symbols, where N is an integer greater than or equal to 0; a target symbol being configured as a DL symbol in a first cell, and the target symbol being a non-SBFD symbol in a CA scenario, then the target symbol being an invalid symbol in a second cell, where serving cells include the first cell and the second cell, and the second cell is a cell different from the first cell in the serving cells; a target symbol being configured as any one of a DL symbol, a UL symbol or an F symbol in a first cell, and the target symbol being configured as a UL symbol or an F symbol in a second cell, then the target symbol being a valid symbol in the second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, the first information indicates that the UL signal is sent in the SBFD symbol(s); and the preset condition includes at least one of the following: a non-SBFD symbol being an invalid symbol; symbol(s) where the SSB is located being DL symbol(s), F symbol(s) or SBFD symbol(s), then the symbol(s) where the SSB is located being the invalid symbol(s); symbol(s) where the SSB is located being SBFD symbol(s), and the terminal being configured to perform measurement on the SSB, then the symbol(s) where the SSB is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where the Type0-PDCCH is located being SBFD symbol(s), and the terminal being configured to receive DCI on the Type0-PDCCH, then the symbol(s) where the Type0-PDCCH is located being the invalid symbol(s); N symbols after the DL symbol or the SBFD symbol being invalid symbols, where N is an integer greater than or equal to 0; a target symbol being configured as a non-SBFD symbol in a CA scenario, then the target symbol being an invalid symbol in a second cell; a target symbol being configured as an SBFD symbol in a CA scenario, and the target symbol being configured as a DL symbol in a second cell, then the target symbol being an invalid symbol in the second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, the first information indicates that the UL signal is sent in the non-SBFD symbol(s); and the preset condition includes at least one of the following: an SBFD symbol being used as an invalid symbol; N symbols after a DL symbol or an SBFD symbol being invalid symbols, where N is an integer greater than or equal to 0; a target symbol being configured as an SBFD symbol in a CA scenario, then the target symbol being an invalid symbol in a second cell; a target symbol being configured as a non-SBFD symbol in a CA scenario, and the target symbol being configured as a DL symbol in a second cell, then the target symbol being an invalid symbol in the second cell.

The disclosure provides a variety of preset conditions to determine possible invalid symbols based on the corresponding preset conditions, thereby ensuring that in transmitting the uplink signal, the uplink signal may be sent on allowed symbols, such that the uplink communication efficiency may be improved.

In some embodiments, the preset condition includes N symbols after a DL symbol or an SBFD symbol being invalid symbols; in which N includes N1 and/or N2. The N symbols are determined in at least one of the following ways: determining N1 consecutive symbols after the DL symbol; or determining N2 consecutive symbols after the SBFD symbol.

The disclosure provides a variety of ways to determine invalid symbols, thereby ensuring that in transmitting the uplink signal, the uplink signal may be sent in allowed symbols, such that the uplink communication efficiency may be improved.

In some embodiments, N1 and/or N2 are determined based on the same parameter; and/or N1 and/or N2 are determined based on different parameters.

The disclosure provides a variety of ways to determine invalid symbols, thereby ensuring that in transmitting the uplink signal, the uplink signal may be sent in allowed symbols, such that the uplink communication efficiency may be improved.

In some embodiments, N1 and/or N2 are configured to be 0; and/or N2 is the same as N1.

The disclosure provides a possible situation for the number of consecutive symbols after the DL symbol and/or the SBFD symbol, and determines the consecutive symbols as invalid symbols, thereby ensuring that in transmitting the uplink signal, the uplink signal may be sent in allowed symbols, such that the uplink communication efficiency may be improved.

In some embodiments, the preset condition may also include at least one of the following: a DL symbol being an invalid symbol; symbol(s) where the SSB is located being the invalid symbol(s); symbol(s) where the Type0-PDCCH is located being the invalid symbol(s); N3 symbols after the DL symbol being invalid symbols, where N3 is an integer greater than or equal to 1; a target symbol being configured as a DL symbol in a first cell, then the target symbol being an invalid symbol in a second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, in the target symbol, the first cell is the cell with the smallest cell index in a first cell group; the third cell in the first cell group is an activated serving cell. The third cell is any cell in the first cell group, and the third cell satisfies at least one of the following conditions: a symbol category corresponding to the third cell being configured as an F symbol, and the terminal being configured to send one or more of an SRS, a PUCCH, a PUSCH or a PRACH in the third cell; a symbol category corresponding to the third cell being configured as an F symbol, and the terminal being configured to receive one or more of a PDCCH, a PDSCH or a CSI-RS in the third cell; or a symbol category corresponding to the third cell being configured as a UL symbol or a DL symbol.

The disclosure provides first cell satisfying conditions to determine possible invalid symbols in the CA scenario, thereby ensuring that in transmitting the uplink signal, the uplink signal may be sent in allowed symbols, such that the uplink communication efficiency may be improved.

In some embodiments, in the target symbol, the second cell is a cell other than the first cell in the serving cells, and satisfies at least one of the following conditions: the second cell being an activated serving cell; or the second cell being configured to perform conflict handling on a conflict generated between the second cell and the first cell.

The disclosure provides second cell satisfying conditions, to determine possible invalid symbols in a CA scenario, thereby ensuring that in transmitting the uplink signal, the uplink signal may be sent in allowed symbols, such that the uplink communication efficiency may be improved.

In some embodiments, the apparatus 200 further includes: a receiving module 202 configured to receive second information. The second information is used for instructing the terminal to send a UL signal. The processing module 201 is further configured to determine invalid symbol(s) in symbols where the UL signal is located based on the first information and the second information.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

In some implementations, the apparatus 200 further includes: a receiving module 202, configured to receive first information.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

FIG. 11 is a schematic diagram illustrating another communication apparatus according to an example embodiment. As illustrated in FIG. 11, the apparatus 300 includes: a sending module 301 configured to send first information. The first information indicates that a terminal sends a UL signal in at least one of the SBFD symbol or the non-SBFD symbol, the symbols where the UL signal is located include invalid symbol(s), and the invalid symbol represents a symbol in which the terminal is not allowed to send the UL signal.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

In some implementations, the invalid symbol(s) is/are determined in the following ways. The invalid symbol(s) is/are determined based on a preset condition. The preset condition corresponds to the first information.

The disclosure may adopt appropriate preset conditions to determine the invalid symbol(s) depending on different situations indicated by the first information, thereby ensuring that in transmitting the uplink signal, the uplink signal may be sent in allowed symbols, such that the uplink communication efficiency may be improved.

In some embodiments, the first information indicates that the terminal sends the UL signal in the SBFD symbol and indicates that the terminal sends the UL signal in the non-SBFD symbol; and the preset condition includes at least one of the following: symbol(s) where the SSB is located being DL symbol(s) or F symbol(s), then the symbol(s) where the SSB is located being the invalid symbol(s); symbol(s) where the SSB is located being DL symbol(s), F symbol(s) or SBFD symbol(s), then the symbol(s) where the SSB is located being the invalid symbol(s); symbol(s) where the SSB is located being SBFD symbol(s), and the terminal being configured to perform measurement on the SSB, then the symbol(s) where the SSB is located being the invalid symbol(s); symbol(s) where the Type0-PDCCH is located being DL symbol(s) or F symbol(s), then the symbol(s) where the Type0-PDCCH is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where Type0-PDCCH is located being SBFD symbol(s), and the terminal being configured to receive DCI on the Type0-PDCCH, then the symbol(s) where Type0-PDCCH is located being the invalid symbol(s); N symbols after the DL symbol or the SBFD symbol being invalid symbols, where N is an integer greater than or equal to 0; a target symbol being configured as a DL symbol in a first cell, and the target symbol being a non-SBFD symbol in a CA scenario, then the target symbol being an invalid symbol in a second cell, where serving cells include the first cell and the second cell, and the second cell is a cell different from the first cell in the serving cells; or a target symbol being configured as any one of a DL symbol, a UL symbol or an F symbol in a first cell, and the target symbol being configured as a UL symbol or an F symbol in a second cell, then the target symbol being a valid symbol in the second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, the first information indicates that the terminal sends the UL signal in the SBFD symbol; and the preset condition includes at least one of the following: a non-SBFD symbol being an invalid symbol; symbol(s) where the SSB is located being DL symbol(s), F symbol(s) or SBFD symbol(s), then the symbol(s) where the SSB is located being the invalid symbol(s); symbol(s) where the SSB is located being SBFD symbol(s), and the terminal being configured to perform measurement on the SSB, then the symbol(s) where the SSB is located being the invalid symbol(s); symbol(s) where the Type0-PDCCH is located being DL symbol(s), F symbol(s) or SBFD symbol(s), then the symbol(s) where the Type0-PDCCH is located being the invalid symbol(s); symbol(s) where the Type0-PDCCH is located being SBFD symbol(s), and the terminal being configured to receive DCI on the Type0-PDCCH, then the symbol(s) where the Type0-PDCCH is located being the invalid symbol(s); N symbols after the DL symbol or the SBFD symbol being invalid symbols, where N is an integer greater than or equal to 0; a target symbol being configured as a non-SBFD symbol in a CA scenario, then the target symbol being an invalid symbol in a second cell; or a target symbol being configured as an SBFD symbol in a CA scenario, and the target symbol being configured as a DL symbol in a second cell, then the target symbol being an invalid symbol in the second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, the first information indicates that the terminal sends the UL signal in the non-SBFD symbol; and the preset condition includes at least one of the following: an SBFD symbol being an invalid symbol; N symbols after a DL symbol or an SBFD symbol being invalid symbols, where N is an integer greater than or equal to 0; a target symbol being configured as an SBFD symbol in a CA scenario, then the target symbol being an invalid symbol in a second cell; a target symbol being configured as a non-SBFD symbol in a CA scenario, and the target symbol being configured as a DL symbol in a second cell, then the target symbol being an invalid symbol in the second cell.

The disclosure provides a variety of preset conditions to determine possible invalid symbols based on the corresponding preset conditions, thereby ensuring that in transmitting the uplink signal, the uplink signal may be sent in allowed symbols, such that uplink communication efficiency may be improved.

In some embodiments, the preset condition includes N symbols after a DL symbol or an SBFD symbol being invalid symbols; in which N includes N1 and/or N2; the N symbols being determined in at least one of the following ways: determining N1 consecutive symbols after the DL symbol; or determining N2 consecutive symbols after the SBFD symbol.

The disclosure provides a variety of ways to determine the invalid symbol(s), thereby ensuring that in transmitting the uplink signal, the uplink signal may be sent in allowed symbols, such that the uplink communication efficiency may be improved.

In some embodiments, N1 and/or N2 are determined based on the same parameter; and/or N1 and/or N2 are determined based on different parameters.

The disclosure provides a variety of ways to determine the invalid symbol(s), thereby ensuring that in transmitting the uplink signal, the uplink signal may be sent in allowed symbols, such that the uplink communication efficiency may be improved.

In some embodiments, N1 and/or N2 are configured to be 0; and/or N2 is the same as N1.

The disclosure provides a possible situation for the number of consecutive symbols after the DL symbols and/or the SBFD symbol, and determines the consecutive symbols as the invalid symbols, thereby ensuring that in transmitting the uplink signal, the uplink signal may be sent in allowed symbols, such that the uplink communication efficiency may be improved.

In some embodiments, the preset condition may also include at least one of the following: a DL symbol being an invalid symbol; symbol(s) where the SSB is located being the invalid symbol(s); symbol(s) where the Type0-PDCCH is located being the invalid symbol(s); N3 symbols after the DL symbol being invalid symbols, where N3 is an integer greater than or equal to 1; a target symbol being configured as a DL symbol in a first cell, then the target symbol being an invalid symbol in a second cell.

The disclosure provides a variety of preset conditions to determine possible invalid symbols based on the corresponding preset conditions, thereby ensuring that in transmitting the uplink signal, the uplink signal may be sent in allowed symbols, such that the uplink communication efficiency may be improved.

In some embodiments, in the target symbol, the first cell is the cell with the smallest cell index in a first cell group; and the third cell in the first cell group is an activated serving cell. The third cell is any cell in the first cell group, and the third cell satisfies at least one of the following conditions: a symbol category corresponding to the third cell being configured as an F symbol, and the terminal being configured to send one or more of an SRS, a PUCCH, a PUSCH or a PRACH in the third cell; a symbol category corresponding to the third cell being configured as an F symbol, and the terminal being configured to receive one or more of a PDCCH, a PDSCH or a CSI-RS in the third cell; or a symbol category corresponding to the third cell being configured as a UL symbol or a DL symbol.

The disclosure provides first cell satisfying conditions to determine possible invalid symbols in a CA scenario, thereby ensuring that in transmitting an uplink signal, the uplink signal may be sent in allowed symbols, such that the uplink communication efficiency may be improved.

In some embodiments, in the target symbol, the second cell is a cell other than the first cell in the serving cells, and satisfies at least one of the following conditions: the second cell being an activated serving cell; or the second cell being configured to perform conflict handling on a conflict generated between the second cell and the first cell.

The disclosure provides second cell satisfying conditions, to determine possible invalid symbols in a CA scenario, thereby ensuring that in transmitting the uplink signal, the uplink signal may be sent in allowed symbols, such that the uplink communication efficiency may be improved.

In some implementations, the sending module 301 is further configured to: send second information. The second information is used for instructing the terminal to send a UL signal.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

It may be understood that the above-mentioned apparatus 200 may further include a sending module, and the apparatus 300 may further include a receiving module, a processing module, etc. That is to say, the above-mentioned apparatus 200 and the apparatus 300 may further include any modules that may be required, which is not limited in the disclosure.

Regarding the apparatuses in the above embodiments, the specific manner in which each module performs operations has been described in detail in the embodiments of the methods, and will not be elaborated here.

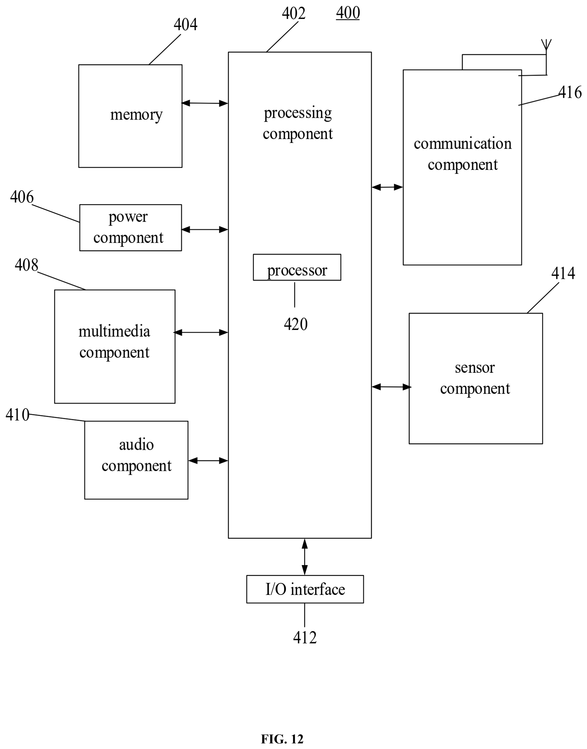

FIG. 12 is a schematic diagram illustrating a communication device according to an example embodiment. For example, the device 400 may be any terminal such as a mobile phone, a computer, a digital broadcast terminal, a message transceiver device, a game console, a tablet device, a medical device, a fitness device, a personal digital assistant, etc.

As illustrated in FIG. 12, the device 400 may include one or more of the following components: a processing component 402, a memory 404, a power component 406, a multimedia component 408, an audio component 410, an input/output (I/O) interface 412, a sensor component 414, or a communication component 416.

The processing component 402 generally controls the overall operation of the device 400, such as operations associated with display, phone calls, data communications, camera operations, and recording operations. The processing component 402 may include one or more processors 420 to execute instructions to perform all or part of the steps of the above-mentioned methods. In addition, the processing component 402 may include one or more modules to facilitate the interaction between the processing component 402 and other components. For example, the processing component 402 may include a multimedia module to facilitate the interaction between the multimedia component 408 and the processing component 402.

The memory 404 is configured to store various types of data to support operations on the device 400. Examples of such data include instructions for any application or method operating on the device 400, contact data, phone book data, messages, pictures, videos, etc. The memory 404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 406 provides power to the various components of the device 400. The power component 406 may include a power management system, one or more power supplies, and other components associated with generating, managing, and distributing power to the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 408 includes a front-facing camera and/or a rear-facing camera. When the device 400 is in an operating mode, such as a shooting mode or a video mode, the front-facing camera and/or the rear-facing camera may receive external multimedia data. Each front-facing camera and the rear-facing camera may be a fixed optical lens system or have a focal length and optical zoom capability.

The audio component 410 is configured to output and/or input audio signals. For example, the audio component 410 includes a microphone (MIC). The device 400 is in an operating mode, such as a call mode, a recording mode, and a speech recognition mode, the microphone is configured to receive an external audio signal. The received audio signal may be further stored in the memory 404 or sent via the communication component 416. In some embodiments, the audio component 410 also includes a speaker for outputting audio signals.

The I/O interface 412 provides an interface between the processing component 402 and peripheral interface modules, such as keyboards, click wheels, buttons, etc. These buttons may include but are not limited to: a home button, a volume button, a start button, and a lock button.

The sensor component 414 includes one or more sensors for providing various aspects of status assessment for the device 400. For example, the sensor component 414 may detect the open/closed state of the device 400, the relative positioning of components, such as the display and keypad of the device 400. The sensor component 414 may also detect the position change of the device 400 or a component of the device 400, the presence or absence of user contact with the device 400, the orientation or acceleration/deceleration of the device 400, and the temperature change of the device 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an accelerometer, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as Wi-Fi, 2G or 3G, or a combination thereof. In an example embodiment, the communication component 416 receives a broadcast signal or broadcast-related information from an external broadcast management system via a broadcast channel. In an example embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the device 400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, a non-transitory computer-readable storage medium including instructions is also provided, such as a memory 404 including instructions, which may be executed by a processor 420 of the device 400 to perform the above methods. For example, the non-transitory computer-readable storage medium may be a ROM, a random access memory (RAM), a CD-ROM, a magnetic tape, a floppy disk, an optical data storage device, etc.

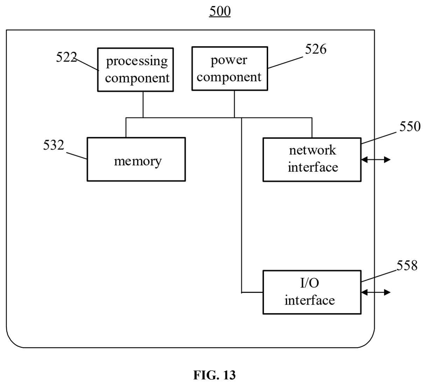

FIG. 13 is a schematic diagram illustrating another communication device according to an example embodiment. For example, the device 500 may be provided as a base station, or a server. As illustrated in FIG. 13, the device 500 includes a processing component 522, which further includes one or more processors, and a memory resource represented by a memory 532 for storing instructions executable by the processing component 522, such as an application. The application stored in the memory 532 may include one or more modules, each corresponding to a set of instructions. In addition, the processing component 522 is configured to execute instructions to perform the above methods.

The device 500 may also include a power component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{®}, Mac OS X^{®}, Unix^{®}, Linux^{®}, FreeBSD^{®}, or the like.

The disclosure determines possible invalid symbols by indicating whether data is allowed to be sent in at least one of the SBFD symbol or the non-SBFD symbol, thereby ensuring that in transmitting the uplink signal, the uplink signal may be sent in allowed symbols, such that the uplink communication efficiency may be improved.

It is further understood that in the disclosure, "a plurality of" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after the character are in an "or" relationship. The singular forms "a", "an" and "the" are also intended to include plural forms, unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. may be used interchangeably. For example, without departing from the scope of the disclosure, the first information may also be referred to as the second information, and similarly, the second information may also be referred to as the first information.

It is further understood that the meanings of the words "in response to" and "if" involved in the disclosure depend on the context and the actual usage scenario. For example, the word "in response to" used herein may be interpreted as "at..." or "when..." or "if" or "in the case where".

It is further understood that, although the operations are described in a specific order in the drawings in the embodiments of the disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the disclosure after considering the specification and practicing the disclosure herein. This disclosure is intended to cover any modifications, uses or adaptations of the disclosure, which follow the general principles of the disclosure and include common knowledge or customary technical means in the art that are not disclosed in the disclosure.

It should be understood that the disclosure is not limited to the precise structures that have been described above and shown in the drawings, and that various modifications and changes may be made without departing from the scope thereof. The scope of the disclosure is limited only by the scope of the appended claims.

## Claims

1. A communication method, performed by a terminal, the method comprising:
determining first information, wherein the first information indicates that an uplink (UL) signal is sent in at least one of a subband full-duplex (SBFD) symbol or a non-SBFD symbol; and
determining an invalid symbol in symbols where the UL signal is located based on the first information, wherein the invalid symbol represents a symbol in which sending the UL signal is not allowed.

2. The method of claim 1, wherein determining the invalid symbol in the symbols where the UL signal is located, based on the first information comprises:
determining the invalid symbol based on a preset condition, wherein the preset condition corresponds to the first information.

3. The method of claim 2, wherein the first information indicates that the UL signal is sent in the SBFD symbol and indicates that the UL signal is sent in the non-SBFD symbol; and
the preset condition comprises at least one of:
a symbol where a synchronization signal block (SSB) is located being a downlink (DL) symbol or a flexible (F) symbol, and the symbol where the SSB is located being the invalid symbol;
a symbol where an SSB is located being a DL symbol, an F symbol or an SBFD symbol, and the symbol where the SSB is located being the invalid symbol;
a symbol where an SSB is located being an SBFD symbol, the terminal being configured to perform measurement on the SSB, and the symbol where the SSB is located being the invalid symbol;
a symbol where a Type0-physical downlink control channel (Type0-PDCCH) is located being a DL symbol or an F symbol, and the symbol where the Type0-PDCCH is located being the invalid symbol;
a symbol where a Type0-PDCCH is located being a DL symbol, an F symbol or an SBFD symbol, and the symbol where the Type0-PDCCH is located being the invalid symbol;
a symbol where a Type0-PDCCH is located being a SBFD symbol, the terminal being configured to receive downlink control information (DCI) on the Type0-PDCCH, and the symbol where the Type0-PDCCH is located being the invalid symbol;
N symbols after a DL symbol or an SBFD symbol being invalid symbols, wherein N is an integer greater than or equal to 0;
a target symbol being configured as a DL symbol in a first cell, the target symbol being a non-SBFD symbol in a carrier aggregation (CA) scenario, and the target symbol being the invalid symbol in a second cell, wherein serving cells comprise the first cell and the second cell, and the second cell is a cell different from the first cell in the serving cells; or
a target symbol being configured as any one of a DL symbol, a UL symbol, or an F symbol in a first cell, the target symbol being configured as a UL symbol or an F symbol in a second cell, and the target symbol being a valid symbol in the second cell.

4. The method of claim 2, wherein the first information indicates that the UL signal is sent in the SBFD symbol; and
the preset condition comprises at least one of:
a non-SBFD symbol being the invalid symbol;
a symbol where a synchronization signal block (SSB) is located being a downlink (DL) symbol, a flexible (F) symbol or an SBFD symbol, and the symbol where the SSB is located being the invalid symbol;
a symbol where an SSB is located being an SBFD symbol, the terminal being configured to perform measurement on the SSB, and the symbol where the SSB is located being the invalid symbol;
a symbol where a Type0-physical downlink control channel (Type0-PDCCH) is located being a DL symbol, an F symbol or an SBFD symbol, and the symbol where the Type0-PDCCH is located being the invalid symbol;
a symbol where a Type0-PDCCH is located being an SBFD symbol, the terminal being configured to receive downlink control information (DCI) on the Type0-PDCCH, and the symbol where the Type0-PDCCH is located being the invalid symbol;
N symbols after a DL symbol or an SBFD symbol being invalid symbols, wherein N is an integer greater than or equal to 0;
a target symbol being configured as a non-SBFD symbol in a carrier aggregation (CA) scenario, and the target symbol being the invalid symbol in a second cell; or
a target symbol being configured as an SBFD symbol in a CA scenario, the target symbol being configured as a DL symbol in a second cell, and the target symbol being the invalid symbol in the second cell.

5. The method of claim 2, wherein the first information indicates that the UL signal is sent in the non-SBFD symbol; and
the preset condition comprises at least one of:
an SBFD symbol being the invalid symbol;
N symbols after a downlink (DL) symbol or an SBFD symbol being invalid symbols, wherein N is an integer greater than or equal to 0;
a target symbol being configured as an SBFD symbol in a carrier aggregation (CA) scenario, and the target symbol being the invalid symbol in a second cell; or
a target symbol being configured as a non-SBFD symbol in a CA scenario, the target symbol being configured as a DL symbol in a second cell, and the target symbol being the invalid symbol in the second cell.

6. The method of any one of claims 3 to 5, wherein the preset condition comprises the N symbols after the DL symbol or the SBFD symbol being the invalid symbols; and the N comprises N1 and/or N2; and
the N symbols are determined in at least one of following ways:
determining N1 consecutive symbols after the DL symbol; or
determining N2 consecutive symbols after the SBFD symbol.

7. The method of claim 6, wherein the N1 and/or the N2 are determined based on a same parameter; and/or
the N1 and/or the N2 are determined based on different parameters.

8. The method of claim 6 or 7, wherein the N1 and/or the N2 are configured to be 0; and/or the N2 is the same as the N1.

9. The method of any one of claims 3 to 8, wherein the preset condition further comprises at least one of:
a DL symbol being the invalid symbol;
a symbol where an SSB is located being the invalid symbol;
a symbol where a Type0-PDCCH is located being the invalid symbol;
N3 symbols after a DL symbol being invalid symbols, wherein N3 is an integer greater than or equal to 1; or
a target symbol being configured as a DL symbol in a first cell, and the target symbol being the invalid symbol in a second cell.

10. The method of any one of claims 3 to 9, wherein in the target symbol, the first cell is a cell with a smallest cell index in a first cell group;
a third cell in the first cell group is an activated serving cell, the third cell is any cell in the first cell group, and the third cell satisfies at least one of:
a symbol category corresponding to the third cell being configured as an F symbol, and the terminal being configured to send one or more of a sounding reference signal (SRS), a physical uplink control channel (PUCCH), a physical downlink shared channel (PUSCH), or a physical random access channel (PRACH) in the third cell;
a symbol category corresponding to the third cell being configured as an F symbol, and the terminal being configured to receive one or more of a physical downlink control channel (PDCCH), a physical uplink shared channel (PDSCH), or a channel state information reference signal (CSI-RS) in the third cell; or
a symbol category corresponding to the third cell being configured as a UL symbol or a DL symbol.

11. The method of any one of claims 3 to 9, wherein in the target symbol, the second cell is a cell other than the first cell in the serving cells, and the second cell satisfies at least one of:
the second cell being an activated serving cell; or
the second cell being configured to perform conflict handling on a conflict generated between the second cell and the first cell.

12. The method of any one of claims 1 to 11, further comprising:
receiving second information, wherein the second information is used for instructing the terminal to send the UL signal;
wherein determining the invalid symbol in the symbols where the UL signal is located based on the first information comprises:
determining the invalid symbol in the symbols where the UL signal is located based on the first information and the second information.

13. The method of any one of claims 1 to 12, wherein determining the first information comprises:
receiving the first information.

14. A communication method, performed by a network device, the method comprising:
sending first information, wherein the first information indicates that a terminal sends an uplink (UL) signal in at least one of a subband full-duplex (SBFD) symbol or a non-SBFD symbol, symbols where the UL signal is located comprise an invalid symbol, and the invalid symbol represents a symbol in which the terminal is not allowed to send the UL signal.

15. The method of claim 14, wherein the invalid symbol is determined by:
determining the invalid symbol based on a preset condition, wherein the preset condition corresponds to the first information.

16. The method of claim 15, wherein the first information indicates that the terminal sends the UL signal in the SBFD symbol and indicates that the terminal sends the UL signal in the non-SBFD symbol; and
the preset condition comprises at least one of:
a symbol where a synchronization signal block (SSB) is located being a downlink (DL) symbol or a flexible (F) symbol, and the symbol where the SSB is located being the invalid symbol;
a symbol where an SSB is located being a DL symbol, an F symbol or an SBFD symbol, and the symbol where the SSB is located being the invalid symbol;
a symbol where an SSB is located being an SBFD symbol, the terminal being configured to perform measurement on the SSB, and the symbol where the SSB is located being the invalid symbol;
a symbol where a Type0-physical downlink control channel (Type0-PDCCH) is located being a DL symbol or an F symbol, and the symbol where the Type0-PDCCH is located being the invalid symbol;
a symbol where a Type0-PDCCH is located being a DL symbol, an F symbol or an SBFD symbol, and the symbol where the Type0-PDCCH is located being the invalid symbol;
a symbol where a Type0-PDCCH is located being an SBFD symbol, the terminal being configured to receive downlink control information (DCI) on the Type0-PDCCH, and the symbol where the Type0-PDCCH is located being the invalid symbol;
N symbols after a DL symbol or an SBFD symbol being the invalid symbols, wherein N is an integer greater than or equal to 0;
a target symbol being configured as a DL symbol in a first cell, the target symbol being a non-SBFD symbol in a carrier aggregation (CA) scenario, and the target symbol being the invalid symbol in a second cell, wherein serving cells comprise the first cell and the second cell, and the second cell is a cell different from the first cell in the serving cells; or
a target symbol being configured as any one of a DL symbol, a UL symbol, or an F symbol in a first cell, the target symbol being configured as a UL symbol or an F symbol in a second cell, and the target symbol being a valid symbol in the second cell.

17. The method of claim 15, wherein the first information indicates that the terminal sends the UL signal in the SBFD symbol; and
the preset condition comprises at least one of:
a non-SBFD symbol being the invalid symbol;
a symbol where a synchronization signal block (SSB) is located being a downlink (DL) symbol, a flexible (F) symbol or an SBFD symbol, and the symbol where the SSB is located being the invalid symbol;
a symbol where an SSB is located being an SBFD symbol, the terminal being configured to perform measurement on the SSB, and the symbol where the SSB is located being the invalid symbol;
a symbol where a Type0-physical downlink control channel (Type0-PDCCH) is located being a DL symbol, an F symbol or an SBFD symbol, and the symbol where the Type0-PDCCH is located being the invalid symbol;
a symbol where a Type0-PDCCH is located being a SBFD symbol, the terminal being configured to receive downlink control information (DCI) on the Type0-PDCCH, and the symbol where the Type0-PDCCH is located being the invalid symbol;
N symbols after a DL symbol or an SBFD symbol being invalid symbols, wherein N is an integer greater than or equal to 0;
a target symbol being configured as a non-SBFD symbol in a carrier aggregation (CA) scenario, and the target symbol being the invalid symbol in a second cell; or
a target symbol being configured as an SBFD symbol in a CA scenario, the target symbol being configured as a DL symbol in a second cell, and the target symbol being the invalid symbol in the second cell.

18. The method of claim 15, wherein the first information indicates that the terminal sends the UL signal in the non-SBFD symbol; and
the preset condition comprises at least one of:
an SBFD symbol being the invalid symbol;
N symbols after a downlink (DL) symbol or an SBFD symbol being invalid symbols, wherein N is an integer greater than or equal to 0;
a target symbol being configured as a SBFD symbol in a carrier aggregation (CA) scenario, and the target symbol being the invalid symbol in a second cell; or
a target symbol being configured as a non-SBFD symbol in a CA scenario, the target symbol being configured as a DL symbol in a second cell, and the target symbol being the invalid symbol in the second cell.

19. The method of any one of claims 16 to 18, wherein the preset condition comprises the N symbols after the DL symbol or the SBFD symbol being the invalid symbols; and the N comprises N1 and/or N2; and
the N symbols are determined in at least one of following ways:
determining N1 consecutive symbols after the DL symbol; or
determining N2 consecutive symbols after the SBFD symbol.

20. The method of claim 19, wherein the N1 and/or the N2 are determined based on a same parameter; and/or
the N1 and/or the N2 are determined based on different parameters.

21. The method of claim 19 or 20, wherein the N1 and/or the N2 are configured to be 0; and/or the N2 is the same as the N1.

22. The method of any one of claims 16 to 21, wherein the preset condition further comprises at least one of:
a DL symbol being the invalid symbol;
a symbol where an SSB is located being the invalid symbol;
a symbol where a Type0-PDCCH is located being the invalid symbol;
N3 symbols after a DL symbol being invalid symbols, wherein N3 is an integer greater than or equal to 1; or
a target symbol being configured as a DL symbol in a first cell, and the target symbol being the invalid symbol in a second cell.

23. The method of any one of claims 16 to 22, wherein in the target symbol, the first cell is a cell with a smallest cell index in a first cell group;
a third cell in the first cell group is an activated serving cell, the third cell is any cell in the first cell group, and the third cell satisfies at least one of:
a symbol category corresponding to the third cell being configured as an F symbol, and the terminal being configured to send one or more of a sounding reference signal (SRS), a physical uplink control channel (PUCCH), a physical downlink shared channel (PUSCH), or a physical random access channel (PRACH) in the third cell;
a symbol category corresponding to the third cell being configured as an F symbol, and the terminal being configured to receive one or more of a physical downlink control channel (PDCCH), a physical uplink shared channel (PDSCH), or a channel state information reference signal (CSI-RS) in the third cell; or
a symbol category corresponding to the third cell being configured as a UL symbol or a DL symbol.

24. The method of any one of claims 16 to 22, wherein in the target symbol, the second cell is a cell other than the first cell in the serving cells, and the second cell satisfies at least one of:
the second cell being an activated serving cell; or
the second cell being configured to perform conflict handling on a conflict generated between the second cell and the first cell.

25. The method of any one of claims 14 to 24, further comprising:
sending second information, wherein the second information is used for instructing the terminal to send the UL signal.

26. A communication system, comprising:
sending, by a network device, first information to a terminal, wherein the first information indicates that the terminal sends an uplink (UL) signal in at least one of a sub-band full-duplex (SBFD) symbol or a non-SBFD symbol;
determining, by the terminal, the first information;
determining, by the terminal, an invalid symbol in symbols where the UL signal is located based on the first information, wherein the invalid symbol represents a symbol in which sending the UL signal is not allowed;
determining, by the terminal, a valid symbol in the symbols where the UL signal is located based on the invalid symbol;
transmitting, by the terminal, the UL signal to the network device based on the valid symbol.

27. A communication system, comprising:
sending, by a network device, first information to a terminal, wherein the first information indicates that the terminal sends an uplink (UL) signal in at least one of a sub-band full-duplex (SBFD) symbol or a non-SBFD symbol;
determining, by the terminal, the first information;
determining, by the terminal, an invalid symbol in symbols where the UL signal is located based on the first information, wherein the invalid symbol represents a symbol where sending the UL signal is not allowed;
determining, by the terminal, a valid symbol in the symbols where the UL signal is located based on the invalid symbol;
sending, by the terminal, the UL signal to a second network device based on the valid symbol, wherein the network device comprises a first network device and the second network device, the first network device is a network device corresponding to a first cell, the second network device is a network device corresponding to a second cell, the first cell is a cell with a smallest cell index in a first cell group, any cell in the first cell group is an activated serving cell, the second cell is a cell other than the first cell in serving cells, and the second cell satisfies at least one of:
the second cell being an activated serving cell; or
the second cell being configured to perform conflict handling on a conflict generated between the second cell and the first cell.

28. A communication apparatus, comprising:
a processing module, configured to determine first information, wherein the first information indicates that an uplink (UL) signal is sent in at least one of a sub-band full-duplex (SBFD) symbol or a non-SBFD symbol;
wherein the processing module is further configured to determine an invalid symbol in symbols where the UL signal is located based on the first information, wherein the invalid symbol represents a symbol in which sending the UL signal is not allowed.

29. A communication apparatus, comprising:
a sending module, configured to send first information, wherein the first information indicates that a terminal sends an uplink (UL) signal in at least one of a sub-band full-duplex (SBFD) symbol or a non-SBFD symbol, symbols where the UL signal is located comprise an invalid symbol, and the invalid symbol represents a symbol in which the terminal is not allowed to send the UL signal.

30. A communication device, comprising:
a processor; and
a memory for storing processor-executable instructions;
wherein, the processor is configured to perform the method of any one of claims 1 to 13.

31. A communication device, comprising:
a processor; and
a memory for storing processor-executable instructions;
wherein the processor is configured to: perform the method of any one of claims 14 to 25.

32. A non-transitory computer-readable storage medium, wherein when instructions in the non- transitory computer-readable storage medium are executed by a processor of a terminal, the terminal is enabled to perform the method of any one of claims 1 to 13.

33. A non-transitory computer-readable storage medium, wherein when instructions in the non- transitory computer-readable storage medium are executed by a processor of a network device, the network device is enabled to perform the method of any one of claims 14 to 25.
